# EUROPEAN PATENT APPLICATION

(11) **EP 4 742 753 A1**
(43) Date of publication of application: **13.05.2026**
(21) Application number: 24848039.4
(22) Date of filing: 18.07.2024
(51) Int. Cl.: H04W 36/00

(54) **COMMUNICATION METHOD AND APPARATUS**

(30) Priority: 29.07.2023 CN 202310949736
(71) Applicant: Huawei Technologies Co., Ltd., Shenzhen, Guangdong 518129 (CN)
(72) Inventor: HUANG, Guogang, Shenzhen, Guangdong 518129 (CN); LI, Yunbo, Shenzhen, Guangdong 518129 (CN); GUO, Yuchen, Shenzhen, Guangdong 518129 (CN); ZHANG, Guanyu, Shenzhen, Guangdong 518129 (CN); ZHANG, Hao, Shenzhen, Guangdong 518129 (CN); ZHAO, Yue, Shenzhen, Guangdong 518129 (CN); GAN, Ming, Shenzhen, Guangdong 518129 (CN); BAI, Xiaofei, Shenzhen, Guangdong 518129 (CN)
(74) Representative: Gill Jennings & Every LLP
(86) International application number: PCT/CN2024/106217
(87) International publication number: WO 2025/026080

(57) **Abstract**

Embodiments of this application relate to a communication method and apparatus. The method includes: An AP MLD receives first downlink data from a current AP MLD, where the first downlink data is data encrypted by using a first key, the first key is a key negotiated by the current AP MLD and a non-AP MLD, and a target AP MLD is an AP MLD of the non-AP MLD after a basic service set BSS transition; and the target AP MLD performs lower-medium access control LMAC layer processing and physical layer processing on the first downlink data, to obtain second downlink data. According to the method and the apparatus in embodiments of this application, roaming performance of the non-AP MLD can be improved.

## Description

### CROSS-REFERENCE TO RELATED APPLICATIONS

This application claims priority to Chinese Patent Application No. 202310949736.2, filed with the China National Intellectual Property Administration on July 29, 2023 and entitled "COMMUNICATION METHOD AND APPARATUS", which is incorporated herein by reference in its entirety.

### TECHNICAL FIELD

Embodiments of this application relate to the field of communication technologies, and in particular, to a communication method and apparatus.

### BACKGROUND

Due to factors such as movement of a non-access point (non-access point, non-AP) multi-link device (multi-link device, MLD), the non-AP MLD needs to switch an access point (access point, AP) MLD associated with the non-AP MLD. During roaming, the non-AP MLD often encounters a rate drop (to be specific, a transmission rate decreases). How to improve roaming performance of the non-AP MLD is an important research direction of next-generation wireless fidelity (wireless fidelity, Wi-Fi) roaming.

### SUMMARY

Embodiments of this application provide a communication method and apparatus. During roaming, data transmission may be performed between a current AP MLD and a target AP MLD, to improve roaming performance of a non-AP MLD.

According to a first aspect, a communication method is provided, including: A target access point AP multi-link device MLD receives first downlink data sent by a current AP MLD, where the first downlink data is data encrypted by using a first key, the first key is a key negotiated by the current AP MLD and a non-access point non-AP MLD, and the target AP MLD is an AP MLD of the non-AP MLD after a basic service set BSS transition; the target AP MLD performs lower-medium access control LMAC layer processing and physical layer processing on the first downlink data, to obtain second downlink data; and the target AP MLD sends the second downlink data to the non-AP MLD.

According to a second aspect, a communication method is provided, including: A target access point AP multi-link device MLD receives first uplink data sent by a non-access point non-AP MLD, where the first uplink data is data encrypted by using a first key, the first key is a key negotiated by a current AP MLD and the non-AP MLD, and the target AP MLD is an AP MLD of the non-AP MLD after a basic service set BSS transition; the target AP MLD performs physical layer processing and lower-medium access control LMAC layer processing on the first uplink data, to determine second uplink data; and the target AP MLD sends the second uplink data to the current AP MLD.

In a design, a first transmission link exists between the non-AP MLD and the current AP MLD, and the method further includes: The target AP MLD receives a first request, where the first request is used to request to establish a second transmission link between the non-AP MLD and the target AP MLD; and the target AP MLD establishes the second transmission link with the non-AP MLD.

In a design, the first request includes indication information for enabling dual-link transmission of the non-AP MLD, and the dual links include the first transmission link and the second transmission link.

In a design, the method further includes: The target AP MLD sends a second request to the current AP MLD. The second request is used to request to enable the dual-link transmission of the non-AP MLD, and the second request includes a maximum MAC layer protocol data unit MPDU length supported by the target AP MLD, and/or a maximum quantity of aggregated MAC layer service data units MSDUs allowed by the target AP MLD.

In a design, the method further includes: The target AP MLD receives a third request, where the third request is used to request to trigger path switching of the non-AP MLD; and the target AP MLD sends a fourth request to a distributed system DS, where the fourth request is used to request the DS to update a stored mapping relationship between the non-AP MLD and the current AP MLD to a mapping relationship between the non-AP MLD and the target AP MLD.

In a design, one or both of the first request and the third request are sent by the non-AP MLD, and one or both of the first request and the third request are transmitted through an air interface between the non-AP MLD and the target AP MLD or are transmitted through the current AP MLD and the DS.

In a design, the first request does not include operating channel information OCI when the first request is transmitted through the current AP MLD and the DS.

In a design, after the target AP MLD receives the third request, and before the target AP MLD sends the fourth request to the DS, the method further includes: The target AP MLD sends a context transfer request to the current AP MLD; and the target AP MLD receives a context transfer response sent by the current AP MLD. The context transfer response includes context information of the non-AP MLD.

In a design, the context transfer response further includes at least one of the following: a block acknowledgement protocol of a traffic identifier TID, a window start position of a transmit buffer of the TID, a window size of the transmit buffer of the TID, a window start position of an uplink receive end scoreboard, a window size of the uplink receive end scoreboard, a window start position of a receive reordering buffer, a window size of the receive reordering buffer, a currently received maximum packet number PN value, or an uplink replay counter.

In a design, after a transmission path of the non-AP MLD is switched from the first transmission path to the second transmission path, the non-AP MLD and the target AP MLD encrypt/decrypt uplink data and/or downlink data by using a second key negotiated by the non-AP MLD and the target AP MLD.

According to a third aspect, a communication method is provided, including: A current access point AP multi-link device MLD receives third downlink data sent by a distributed system DS; the current AP MLD encrypts the third downlink data by using a first key, to obtain first downlink data, where the first key is a key negotiated by the current AP MLD and a non-access point non-AP MLD; and the current AP MLD sends the first downlink data to a target AP MLD, where the target AP MLD is an AP MLD of the non-AP MLD after a basic service set BSS transition.

According to a fourth aspect, a communication method is provided, including: A current access point AP multi-link device MLD receives second uplink data sent by a target AP MLD, where the target AP MLD is an AP MLD of a non-access point non-AP MLD after a basic service set BSS transition; the current AP MLD performs upper-medium access control UMAC layer processing on second uplink data, and decrypts the second uplink data by using a first key, to determine third uplink data, where the first key is a key negotiated by the current AP MLD and the non-AP MLD; and the current AP MLD sends the third uplink data to a distributed system DS.

In a design, a first transmission link exists between the current AP MLD and the non-AP MLD, and the method further includes:

The current AP MLD receives a second request sent by the target AP MLD, where the second request is used to request to enable dual-link transmission of the non-AP MLD, the second request includes a maximum medium access control MAC layer protocol data unit MPDU length supported by the target AP MLD, and/or a maximum quantity of aggregated MAC layer service data units MSDUs allowed by the target AP MLD, and the dual links include the first transmission link and a second transmission link between the non-AP MLD and the target AP MLD.

In a design, the method further includes: The current AP MLD receives a fifth request sent by the non-AP MLD, where the fifth request is used to request to disconnect the first transmission link between the non-AP MLD and the current AP MLD, the fifth request includes first indication information, and the first indication information indicates the current AP MLD to reserve block acknowledgement BA information and/or context information of the non-AP MLD and buffer data that is not sent by the non-AP MLD; and
the current AP MLD sends a sixth request to the DS, where the sixth request is used to request to delete a mapping relationship that is between the non-AP MLD and the current AP MLD and that is stored in the DS.

In a design, the method further includes: The current AP MLD receives a context transfer request sent by the target AP MLD; and the current AP MLD sends a context transfer response to the target AP MLD. The context transfer response includes context information of the non-AP MLD.

In a design, the context transfer response further includes at least one of the following: a block acknowledgement protocol of a traffic identifier TID, a window start position of a transmit buffer of the TID, a window size of the transmit buffer of the TID, a window start position of an uplink receive end scoreboard, a window size of the uplink receive end scoreboard, a window start position of a receive reordering buffer, a window size of the receive reordering buffer, a currently received maximum packet number PN value, or an uplink replay counter.

In a design, the method further includes: The current AP MLD sends a beacon measurement request to the non-AP MLD. The beacon measurement request includes indication information of a corresponding link of a serving AP.

In a design, the method further includes: The current AP MLD sends a seventh request to the non-AP MLD. The seventh request includes second indication information, and the second indication information indicates the non-AP MLD to reserve the BA information and/or the context information of the non-AP MLD and buffer the data that is not sent by the non-AP MLD.

According to a fifth aspect, a communication method is provided, including: A non-access point non-AP multi-link device MLD receives, by using a target access point AP MLD, data sent by a current access point AP MLD, where the target AP MLD is an AP MLD of the non-AP MLD after a basic service set BSS transition, the data is data encrypted by the current AP MLD by using a first key, and the first key is a key negotiated by the current AP MLD and the non-access point non-AP MLD; and the non-AP MLD decrypts the data by using the first key.

According to a sixth aspect, a communication method is provided, including: A non-access point non-AP multi-link device MLD encrypts to-be-transmitted uplink data by using a first key, to determine first uplink data, where the first key is a key negotiated by a current access point AP MLD and the non-AP MLD; and the non-AP MLD sends the first uplink data to the current AP MLD by using a target AP MLD, where the target AP MLD is an AP MLD of the non-AP MLD after a basic service set BSS transition.

In a design, a first transmission link exists between the non-AP MLD and the current AP MLD, and the method further includes:

The non-AP MLD sends a first request, where the first request is used to request to establish a second transmission link between the non-AP MLD and the target AP MLD.

In a design, the first request includes indication information for enabling the dual-link transmission of the non-AP MLD, and the dual links include the first transmission link and the second transmission link.

In a design, the method further includes: The non-AP MLD sends a third request. The third request is used to request to trigger path switching of the non-AP MLD.

In a design, one or both of the first request and the third request are sent to the target AP MLD, and one or both of the first request and the third request are transmitted through an air interface between the non-AP MLD and the target AP MLD or are transmitted through the current AP MLD and the DS.

In a design, the first request does not include operating channel information OCI when the first request is transmitted through the current AP MLD and the DS.

In a design, the method further includes: The non-AP MLD sends a fifth request to the current AP MLD. The fifth request includes first indication information, and the first indication information indicates the current AP MLD to reserve block acknowledgement BA information and/or context information of the non-AP MLD and buffer data that is not sent by the non-AP MLD.

In a design, the method further includes: The non-AP MLD receives a beacon measurement request sent by the current AP MLD. The beacon measurement request includes indication information of a corresponding link of a serving AP.

In a design, the method further includes: The non-AP MLD receives a seventh request sent by the current AP MLD. The seventh request includes second indication information, and the second indication information indicates the non-AP MLD to reserve the BA information and/or the context information of the non-AP MLD and buffer data that is not sent by the non-AP MLD.

In a design, after a transmission path of the non-AP MLD is switched from the first transmission path to the second transmission path, the non-AP MLD and the target AP MLD encrypt/decrypt uplink data and/or downlink data by using a second key negotiated by the non-AP MLD and the target AP MLD.

In a design, in the foregoing aspects, data is sent or received between the current AP MLD and the target AP MLD in a transparent transmission manner.

According to a seventh aspect, an apparatus is provided. The apparatus can implement the method in the first aspect or the second aspect. For example, the apparatus includes a means (means) corresponding to the first aspect or the second aspect. The apparatus may be implemented by hardware, implemented by software, or implemented by hardware executing corresponding software.

In a design, the apparatus includes a unit that performs the first aspect or the second aspect.

In a design, the apparatus includes a processor and a memory. The processor is configured to execute a computer program or instructions stored in the memory, to enable the apparatus to implement the method in the first aspect or the second aspect.

In a design, the apparatus includes a processor and an interface circuit. The interface circuit is configured to: receive a signal from an apparatus other than the apparatus and transmit the signal to the processor, or send a signal from the processor to an apparatus other than the apparatus. The processor is configured to implement the method in the first aspect or the second aspect by using a logic circuit or by executing code instructions.

According to an eighth aspect, an apparatus is provided. The apparatus can implement the method in the third aspect or the fourth aspect. For example, the apparatus includes a means (means) corresponding to the third aspect or the fourth aspect. The apparatus may be implemented by hardware, implemented by software, or implemented by hardware executing corresponding software.

In a design, the apparatus includes a unit that performs the third aspect or the fourth aspect.

In a design, the apparatus includes a processor and a memory. The processor is configured to execute a computer program or instructions stored in the memory, to enable the apparatus to implement the method in the third aspect or the fourth aspect.

In a design, the apparatus includes a processor and an interface circuit. The interface circuit is configured to: receive a signal from an apparatus other than the apparatus and transmit the signal to the processor, or send a signal from the processor to an apparatus other than the apparatus. The processor is configured to implement the method in the third aspect or the fourth aspect by using a logic circuit or by executing code instructions.

According to a ninth aspect, an apparatus is provided. The apparatus can implement the method in the fifth aspect or the sixth aspect. For example, the apparatus includes a means (means) corresponding to the fifth aspect or the sixth aspect. The apparatus may be implemented by hardware, implemented by software, or implemented by hardware executing corresponding software.

In a design, the apparatus includes a unit that performs the fifth aspect or the sixth aspect.

In a design, the apparatus includes a processor and a memory. The processor is configured to execute a computer program or instructions stored in the memory, to enable the apparatus to implement the method in the fifth aspect or the sixth aspect.

In a design, the apparatus includes a processor and an interface circuit. The interface circuit is configured to: receive a signal from an apparatus other than the apparatus and transmit the signal to the processor, or send a signal from the processor to an apparatus other than the apparatus. The processor is configured to implement the method in the fifth aspect or the sixth aspect by using a logic circuit or by executing code instructions.

According to a tenth aspect, a computer-readable storage medium is provided, storing a computer program or instructions. When the computer program or the instructions are run on a computer, the computer is enabled to implement the method in any one of the first aspect to the sixth aspect.

According to an eleventh aspect, a computer program product is provided, including a computer program or instructions. When the computer program or the instructions are run on a computer, the method in any one of the first aspect to the sixth aspect is performed.

According to a twelfth aspect, a chip is provided, including a processor. The processor is coupled to a memory, and is configured to execute a computer program or instructions stored in the memory, to enable the chip to implement the method in any one of the first aspect to the sixth aspect.

According to a thirteenth aspect, a communication system is provided, including a first communication apparatus, a second communication apparatus, and a third communication apparatus. The first communication apparatus is configured to implement the method in the first aspect or the second aspect, the second communication apparatus is configured to implement the method in the third aspect or the fourth aspect, and the third communication apparatus is configured to implement the method in the fifth aspect or the sixth aspect.

### BRIEF DESCRIPTION OF DRAWINGS

FIG. 1 is a diagram of a multi-link device MLD according to an embodiment of this application;
FIG. 2 is a diagram of an application scenario according to an embodiment of this application;
FIG. 3 is a flowchart of downlink data transmission according to an embodiment of this application;
FIG. 4A and FIG. 4B are a diagram of processing downlink data according to an embodiment of this application;
FIG. 5 is a flowchart of uplink data transmission according to an embodiment of this application;
FIG. 6A and FIG. 6B are a diagram of processing uplink data according to an embodiment of this application;
FIG. 7a is a flowchart of roaming switching according to an embodiment of this application;
FIG. 7b and FIG. 7c each are a diagram of a message format according to an embodiment of this application;
FIG. 8 is another flowchart of roaming switching according to an embodiment of this application;
FIG. 9, FIG. 10, and FIG. 11 each are a diagram of a message format according to an embodiment of this application; and
FIG. 12 and FIG. 13 each are a diagram of a structure of an apparatus according to embodiments of this application.

### DESCRIPTION OF EMBODIMENTS

To make objectives, technical solutions, and advantages of embodiments of this application clearer, the following further describes embodiments of this application in detail with reference to the accompanying drawings. Specific operation methods, function descriptions, and the like in method embodiments may also be applied to apparatus embodiments or system embodiments.

Embodiments of this application may be applied to a wireless local area network (wireless local area network, WLAN) system, and embodiments of this application may be applied to the institute of electrical and electronics engineers (institute of electrical and electronics engineers, IEEE) 802.11 series protocols such as 802.11be, 802.11bf, and a future 802.11 protocol used in a WLAN. Methods provided in embodiments of this application may be implemented by a communication device in a wireless communication system or a chip, a circuit, or the like used in the communication device. Correspondingly, the communication device supports communication via IEEE 802.11 series protocols. Although embodiments of this application are mainly described by using a network deployed with IEEE 802.11 as an example, persons skilled in the art easily understand that aspects in embodiments of this application may be extended to other networks using various standards or protocols, for example, Bluetooth (BLUETOOTH), a high-performance radio local area network (local area network, LAN) (high-performance radio LAN, HIPERLAN) (a wireless standard similar to the IEEE 802.11 standard, mainly used in Europe), a wide area network (wide area network, WAN), a WLAN, a personal area network (personal area network, PAN), or another network that is known or developed later. The technical solutions in embodiments of this application may be applied to various cellular communication systems, for example, a 5th generation (5th generation, 5G) system, a new radio (new radio, NR) system, and a future 6th generation (6th generation, 6G) system.

A multi-link technology may be used in IEEE 802.11 next-generation wireless fidelity (wireless fidelity, Wi-Fi) extremely high throughput (extremely high throughput, EHT), to improve a transmission rate. A device that has a multi-link aggregation capability is referred to as a multi-link device (multi-link device, MLD). In a design, the MLD may mean that the device simultaneously has a plurality of radio frequency modules that respectively operate on different bands/channels. When a spacing between channels on which two radio frequency modules in one device operate is large enough, the two radio frequency modules may operate independently without interfering with each other. For any two links, if sending on one link and receiving on the other link can be simultaneously performed, it is considered that the two links support a simultaneous transmit and receive (simultaneous transmit and receive, STR) capability; or if sending on one link and receiving on the other link cannot be simultaneously performed, it is considered that the two links do not support a simultaneous transmit and receive capability. In other words, non-simultaneous transmit and receive (non-STR) are performed on the two links.

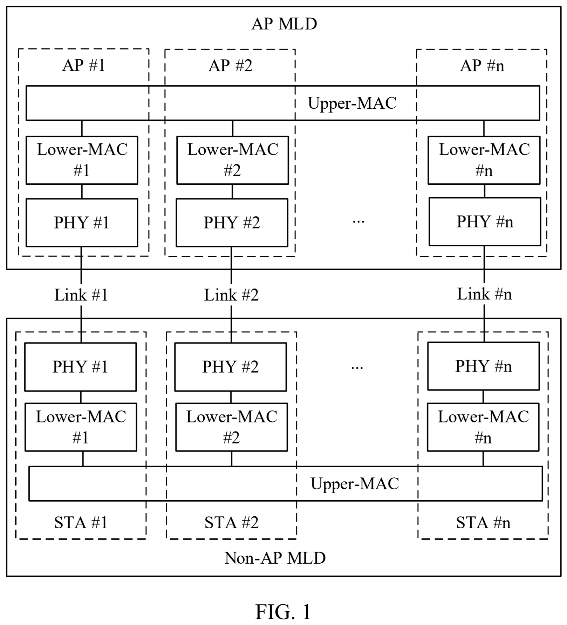

The MLD may include a non-access point (non-access point, non-AP) MLD and/or an access point (access point, AP) MLD. The non-AP MLD may also be referred to as a station (station, STA) MLD. The non-AP MLD and the AP MLD may communicate with each other. As shown in FIG. 1, the MLD (for example, the AP MLD or the non-AP MLD) may include a physical layer (physical layer, PHY) (a PHY #1, a PHY #2, and a PHY #n shown in FIG. 1) and a medium access control (medium access control, MAC) layer. The physical layer may be used to process a physical layer signal, and the MAC layer may be used to process a MAC layer signal. Further, the MAC layer may be further divided into one upper-MAC (upper-MAC, UMAC) layer (upper-MAC shown in FIG. 1) and a plurality of lower-MAC (lower-MAC, LMAC) layers (lower-MAC #1, and lower-MAC #2 to lower-MAC #n shown in FIG. 1). As shown in FIG. 1, a plurality of APs included in the AP MLD are independent of each other at the lower-MAC layer and the PHY, and share the upper-MAC layer. A plurality of STAs included in the non-AP MLD are independent of each other at the lower-MAC layer and the PHY, and share the upper-MAC layer. The upper-MAC layer is separately connected to the plurality of lower-MAC layers. In other words, the upper-MAC layer is shared by a plurality of links. For example, the upper-MAC layer mainly completes operations such as sequence number (sequence number, SN) assignment, packet number (packet number, PN) assignment, and encryption/decryption on a MAC service data unit (MAC service data unit, MSDU). For example, the lower-MAC layer mainly completes operations such as assembly, channel access, packet sending and receiving acknowledgement of a MAC protocol data unit (MAC protocol data unit, MPDU) of a link of the lower-MAC layer.

In FIG. 1, the PHY #1 layer, the lower-MAC #1 layer, and the upper-MAC layer in the AP MLD may be considered as an AP #1, the PHY #2 layer, the lower-MAC #2 layer, and the upper-MAC layer may be considered as an AP #2, ..., and the PHY #n layer, the lower-MAC #n layer, and the upper-MAC layer may be considered as an AP #n. In other words, it may be understood as that the AP MLD includes n AP entities. The same is true to the non-AP MLD. To be specific, the upper-MAC layer in the non-AP MLD is also shared by a plurality of links, the PHY #1 layer, the lower-MAC #1 layer, and the upper-MAC layer are considered as a STA #1, the PHY #2 layer, the lower-MAC #2 layer, and the upper-MAC layer are considered as a STA #2, ..., and the PHY #n layer, the lower-MAC #n layer, and the upper-MAC layer are considered as a STA #n. In other words, it may be understood that the non-AP MLD includes n STA entities. As shown in FIG. 1, the PHY #1 of the AP #1 in the AP MLD and the PHY #1 of the STA #1 in the non-AP MLD operate on a same channel, and the AP #1 in the AP MLD and the STA #1 in the non-AP MLD communicate through a link (for example, a link #1 shown in FIG. 1). The PHY #2 of the AP #2 in the AP MLD and the PHY #2 of the STA #2 in the non-AP MLD operate on another same channel, and the AP #2 in the AP MLD and the STA #2 in the non-AP MLD communicate through a link (for example, a link #2 shown in FIG. 1). The PHY #n of the AP #n in the AP MLD and the PHY #n of the STA #n in the non-AP MLD operate on another same channel, and the AP #n in the AP MLD and the STA #n in the non-AP MLD communicate through a link (for example, a link #n shown in FIG. 1).

In embodiments of this application, due to factors such as movement, the non-AP MLD may switch an AP MLD associated with the non-AP MLD. For example, because the non-AP MLD moves, the non-AP MLD moves from a coverage area of an AP MLD 1 to a coverage area of an AP MLD 2. Therefore, the AP MLD associated with the non-AP MLD may need to be switched. In a design, during switching, the non-AP MLD disconnects an old link with a current (current) AP MLD, and then establishes a new link with a target (target) AP MLD. A transmission link is interrupted. Therefore, there is a risk of a rate drop in a switching process. In the solution of embodiments of this application, the non-AP MLD first establishes a second transmission link to the target AP MLD, and the non-AP MLD and the current AP MLD still perform data transmission. Then, at a time point, the non-AP MLD disconnects a first transmission link with the current AP MLD. In the switching process, the non-AP MLD may simultaneously perform data transmission with the current AP MLD and the target AP MLD based on a multi-link capability. In the entire switching process, the non-AP MLD always has a transmission link, and not all transmission links are interrupted. In this way, the risk of the rate drop in the switching process is reduced.

In the solution provided in embodiments of this application, in the switching or roaming process, of the non-AP MLD, when dual connectivity transmission is enabled, for downlink transmission, the current AP MLD needs to transparently transmit encrypted data to the target AP MLD, and after receiving the encrypted data, the target AP MLD directly delivers the encrypted data to lower-MAC of the target AP MLD for sending; and for uplink transmission, the target AP MLD transparently transmits the data received by the lower-MAC to the current AP MLD, and after receiving the data, the current AP MLD directly delivers the data to upper-MAC of the current AP MLD for subsequent processing, for example, decryption. After the non-AP MLD completes switching, that is, completes roaming, to be specific, when the transmission link of the non-AP MLD is switched from the current AP MLD to the target AP MLD, the target MLD may perform encryption/decryption by using a key (referred to as a second key below) negotiated with the target AP MLD.

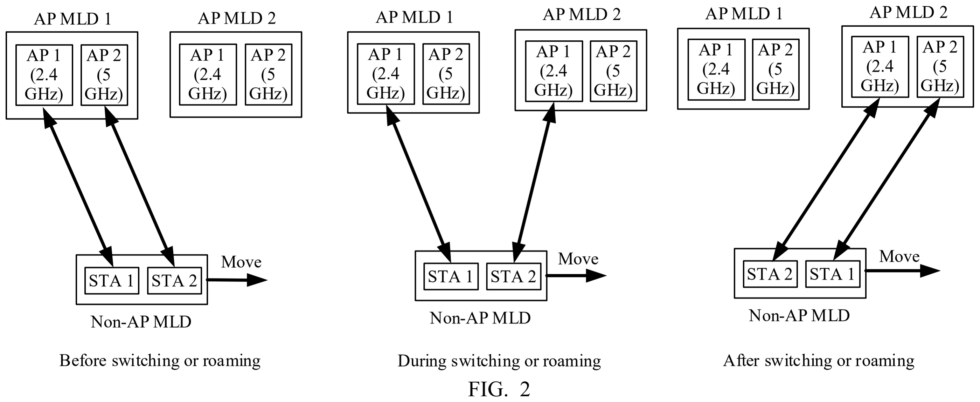

As shown in FIG. 2, a communication system is provided. The communication system includes a non-AP MLD and an AP MLD.

In this embodiment of this application, the non-AP MLD may be a device having a wireless transceiver function. For example, the non-AP MLD may be a terminal device, user equipment (user equipment, UE), an access terminal, a subscriber unit (subscriber unit), a subscriber station, a mobile station (mobile station), a remote station, a remote terminal, a mobile device, a user terminal, a wireless communication device, a user agent, or a user apparatus. During specific application, the non-AP MLD may be a cellular phone, a mobile phone (mobile phone), a tablet computer (pad), a wearable device, a smart point of sale (point of sale, POS) machine, customer-premises equipment (customer-premises equipment, CPE), a computer having a wireless transceiver function, a virtual reality (virtual reality, VR) terminal, an augmented reality (augmented reality, AR) terminal, a terminal device in industrial control (industrial control), a terminal device in self-driving (self-driving), a terminal device in telemedicine (remote medical), a terminal device in smart grid (smart grid), a terminal device in smart city (smart city), a terminal in smart home (smart home), or the like.

In this embodiment of this application, the non-AP MLD may include a plurality of links, the plurality of links respectively correspond to different STA entities, and the plurality of STA entities are independent of each other at a lower-MAC layer and a PHY layer, and share an upper-MAC layer. The plurality of STA entities usually operate on different bands or channels. In the example in FIG. 2, the non-AP MLD includes two STA entities, which are respectively referred to as a STA 1 and a STA 2. Both the STA 1 and the STA 2 may operate on a 2.4G band and a 5G band. At a moment, the STA 1 and the STA 2 operate on different bands.

The AP MLD may be the AP MLD 1 and/or the AP MLD 2 in FIG. 2. In this embodiment of this application, the AP MLD is a device such as a wireless hub or a router configured to provide a wireless network access service, and may serve as an access point for the non-AP MLD to enter a wired Ethernet backbone, or the like.

Similar to the non-AP MLD, the AP MLD may include a plurality of links, the plurality of links respectively correspond to different AP entities, and the plurality of AP entities are independent of each other at a lower-MAC layer and a PHY layer, and share an upper-MAC layer. The plurality of AP entities usually operate on different bands or channels. In the example in FIG. 2, the AP MLD 1 and the AP MLD 2 each include two AP entities that are respectively referred to as an AP 1 and an AP 2. The AP 1 and the AP 2 operate on different bands. The AP 1 operates on a 2.4 GHz band, and the AP 2 operates on a 5 GHz band.

In a design, before switching or roaming, the non-AP MLD is associated with the AP MLD 1, and the AP MLD 1 is referred to as a current AP MLD. Specifically, as shown in FIG. 2, the STA 1 operates on the 2.4 band, and establishes a link with the AP 1. The STA 2 operates on the 5G band, and establishes a link with the AP 2.

Due to factors such as movement, the non-AP MLD moves out of a coverage area of the current AP MLD, namely, the AP MLD 1, and enters a coverage area of a target AP MLD (namely, the AP MLD 2). In a switching or roaming process, a transmission link is established between the non-AP MLD and each of the current AP MLD (namely, the AP MLD 1) and the target AP MLD (namely, the AP MLD 2). Specifically, as shown in FIG. 2, in the switching or roaming process, the STA 2 in the non-AP MLD may disconnect a link with the AP 2 in the current AP MLD, and the STA 2 establishes a link with the AP 1 in the target AP MLD. As described above, two STAs in the non-AP MLD may operate on the 2.4 GHz or 5 GHz band. In the example in FIG. 2, the STA 2 operates on the 2.4 GHz band, and establishes a link with the AP 1 in the target STA MLD.

At a time point, the non-AP MLD may be completely switched from the current AP MLD to the target AP MLD. In the example in FIG. 2, the STA 1 in the non-AP MLD disconnects a link with the current AP MLD, and the STA 1 in the non-AP MLD establishes a link with an AP in the target AP MLD. In the example in FIG. 2, the STA 1 disconnects a link with the current AP MLD, and the STA 1 operates on the 5 GHz band, and establishes a link with the AP 2 in the target AP MLD.

As shown in FIG. 2, it can be learned that, after switching or roaming of the non-AP MLD ends, the non-AP MLD accesses the target AP MLD. Specifically, the STA 1 in the non-AP MLD establishes a link with the AP 2 in the target AP MLD, and the STA 2 establishes a link with the AP 1 in the target AP MLD.

In a possible implementation, the communication system shown in FIG. 2 may further include a device such as another non-AP MLD and/or another AP MLD, another device, or the like. This is not limited. For example, the communication system may further include a distributed system (distributed system, DS). In an implementation, the DS may interconnect a plurality of basic service sets (basic service set, BSS) and integrate a system of a local area network, to form an extended service set (extended service set, ESS). In other words, the DS may construct an ESS, and the ESS includes a plurality of interconnected BSSs. Alternatively, it is described as follows: The DS includes a plurality of interconnected BSSs, and the like. The BSS is a basic part of the local area network (local area network, LAN) 802.11. The BSS includes STAs that have an association and that are located in a coverage area. For example, the AP MLD may include a plurality of AP entities, each AP entity corresponds to one BSS, the BSS corresponding to each AP entity may include at least one STA, and the plurality of STAs are associated with the AP entity corresponding to the BSS. Before switching or roaming, in downlink data transmission, the DS may forward downlink data to the current AP MLD, and the current AP MLD sends the downlink data to the non-AP MLD; and in uplink data transmission, the non-AP MLD may send uplink data to the current AP MLD, and the current AP MLD delivers the uplink data to the DS. After switching or roaming ends, in downlink data transmission, the DS may forward downlink data to the target AP MLD, and the target AP MLD sends the downlink data to the non-AP MLD; and in uplink data transmission, the non-AP MLD may send uplink data to the target AP MLD, and the target AP MLD delivers the uplink data to the DS. In the switching or roaming process, a transmission link is established between the non-AP MLD and each of the current AP MLD and the target AP MLD. For a process of uplink data transmission and a process of downlink data transmission, refer to the following descriptions.

In this embodiment of this application, in the switching or roaming process, the uplink data or the downlink data may be transmitted between the non-AP MLD and the target AP MLD. In a process of transmitting the uplink data or the downlink data, data transmission between the non-AP MLD and the target AP MLD is encrypted/decrypted by using a first key. The first key is a key negotiated by the non-AP MLD and the current AP MLD.

In the following descriptions, in downlink data transmission and uplink data transmission, a first transmission link exists between the non-AP MLD and the current AP MLD, and a second transmission link exists between the non-AP MLD and the target AP MLD. Before roaming or switching of the non-AP MLD, the first transmission link is established between the non-AP MLD and the current AP MLD. During roaming or switching, the second transmission link may be established between the non-AP MLD and the target AP MLD. For a process of establishing the second transmission link, refer to the following descriptions. It should be noted that, in this embodiment of this application, switching or roaming of the non-AP MLD may also be referred to as a BSS transition of the non-AP MLD. The current AP MLD may be referred to as an AP MLD of the non-AP MLD before the BSS transition, and the target AP MLD may be referred to as an AP MLD of the non-AP MLD after the BSS transition, and the like.

### [Downlink data transmission]

In a design, in downlink data transmission, a current AP MLD receives third downlink data sent by a DS. First downlink data is obtained through processing at upper-MAC of the current AP MLD. During encryption in processing at the upper-MAC, the third downlink data is encrypted by using a first key. The current AP MLD sends the first downlink data to a target AP MLD, and the target AP MLD performs lower-MAC layer processing and physical layer processing on the first downlink data, to obtain second downlink data. The target AP MLD sends the second downlink data to a non-AP MLD.

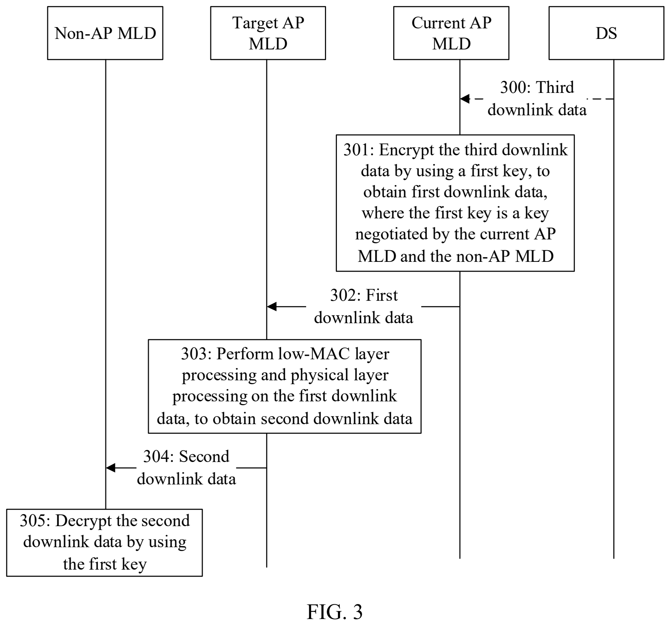

As shown in FIG. 3, a procedure is provided. The procedure is applicable to downlink data transmission, and includes the following steps.

Step 300: A current AP MLD receives third downlink data sent by a DS.

In this embodiment of this application, the DS may store a mapping relationship between a non-AP MLD and the current AP MLD, and a data path exists between the DS and the current AP MLD. When the DS receives the third downlink data, a destination address of the third downlink data may be an address of the non-AP MLD. The DS may determine, based on the stored mapping relationship between the non-AP MLD and the current AP MLD, that the non-AP MLD is associated with the current AP MLD. Therefore, the DS forwards the third downlink data to the current AP MLD. Alternatively, the third downlink data is to-be-sent downlink data of the current AP MLD. Therefore, step 300 is an implementation, and does not necessarily need to be performed.

Step 301: The current AP MLD encrypts the third downlink data by using a first key, to obtain first downlink data, where the first key is a key negotiated by the current AP MLD and the non-AP MLD.

For example, the current AP MLD may perform upper-MAC layer processing on the third downlink data. In a process of upper-MAC layer processing, the current AP MLD encrypts the third downlink data by using the first key negotiated by the current AP MLD and the non-AP MLD, to obtain the first downlink data. In this case, the first downlink data may be referred to as data encrypted by using the first key, and the first key is a key negotiated by the current AP MLD and the non-AP MLD. In an implementation, the first key may be a pairwise transient key (pairwise transient key, PTK).

Step 302: The current AP MLD sends the first downlink data to a target AP MLD.

In a design, step 302 may be described as follows: The current AP MLD transparently transmits the first downlink data to the target AP MLD. For example, data transmission between the current AP MLD and the target AP MLD requires forwarding by a DS. For example, the current AP MLD sends the first downlink data to the DS, and the DS transparently transmits the first downlink data to the target AP MLD.

Step 303: The target AP MLD performs lower-MAC layer processing and physical layer processing on the first downlink data, to obtain second downlink data.

Step 304: The target AP MLD sends the second downlink data to the non-AP MLD.

For example, a second transmission link may be established between the target AP MLD and the non-AP MLD, and the target AP MLD may send the second downlink data to the non-AP MLD through the second transmission link. The non-AP MLD receives the second downlink data from the target AP MLD. Alternatively, it is described as follows: The non-AP MLD receives data from the current AP MLD through the target AP MLD.

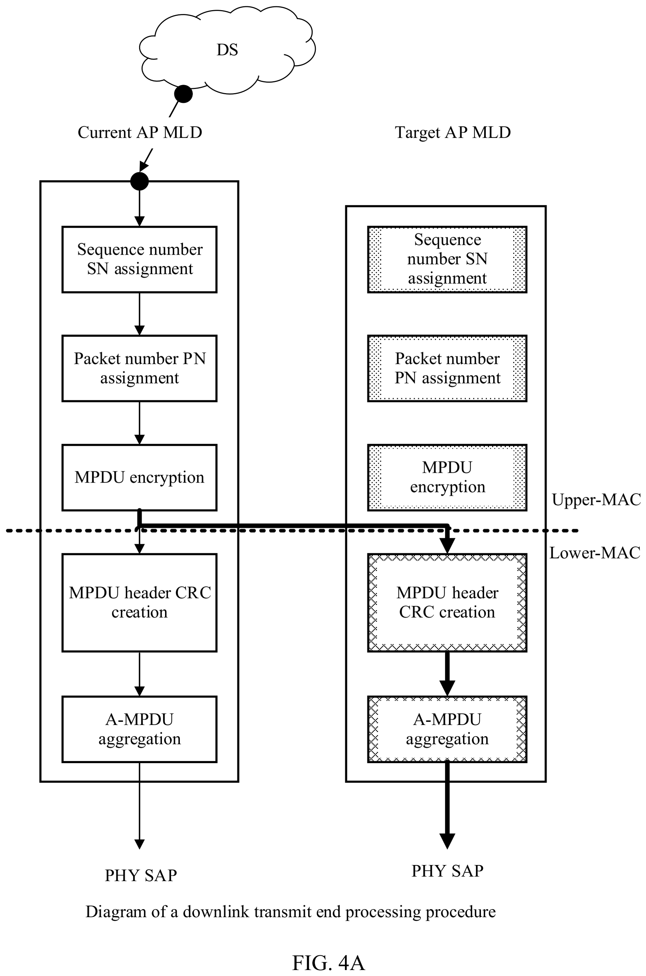

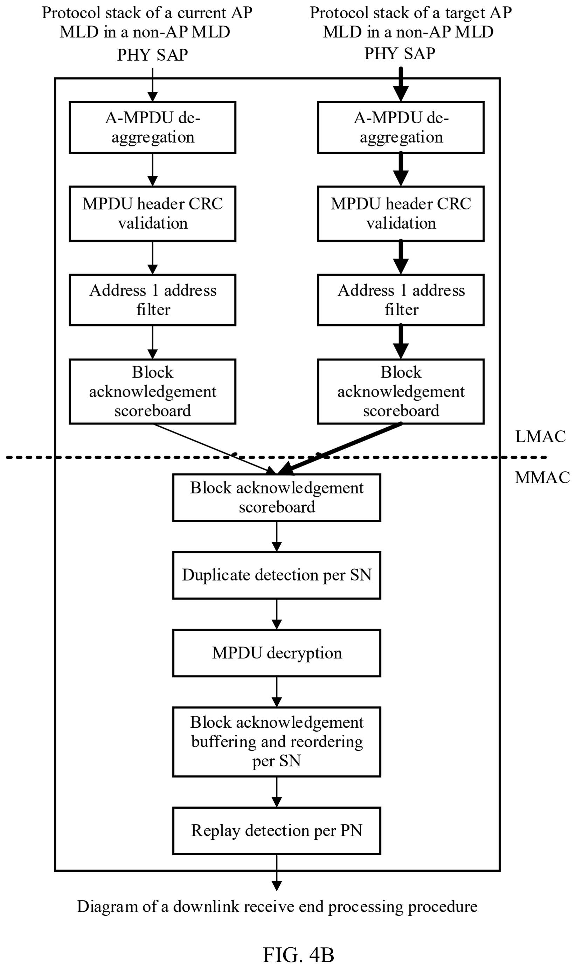

For example, as shown in FIG. 4A and FIG. 4B, the current AP MLD may receive the third downlink data sent by the DS, and the DS may perform upper-MAC layer processing on the third downlink data, to obtain the first downlink data. Upper-MAC layer processing includes but is not limited to at least one of the following: sequence number SN assignment (SN assignment), packet number PN assignment (PN assignment), or downlink data encryption. In a design, data input into a MAC layer may be referred to as an MSDU, and data output by the MAC layer through MAC layer processing may be referred to as an MPDU. Therefore, the third downlink data may be referred to as an MSDU, the first downlink data may be referred to as an MPDU, and downlink data encryption at the MAC layer may be referred to as MPDU encryption (MPDU encryption). The current AP MLD transparently transmits the first downlink data to the target AP MLD through the DS. The target AP MLD performs lower-MAC layer processing and physical layer processing on the first downlink data, to obtain the second downlink data. As shown in FIG. 4A and FIG. 4B, lower-MAC layer processing includes but is not limited to: MPDU header cyclic redundancy check creation (cyclic redundancy check, CRC) (MPDU header CRC creation) and/or A-MPDU aggregation (aggregation). For example, in a process of MPDU header CRC creation, the target AP MLD may add a CRC check bit to a header of the first downlink data. In a process of A-MPDU aggregation, the target AP MLD may aggregate a plurality of pieces of first downlink data together, and the like. In the example in FIG. 4A and FIG. 4B, an interface between a lower-MAC layer and a physical layer of the current AP MLD or an interface between a lower-MAC layer and a physical layer of the target AP MLD may be referred to as a physical layer service access point (service access point, SAP). The lower-MAC of the target AP MLD transmits, through the physical layer SAP, data obtained through lower-MAC processing to the physical layer, and the second downlink data is obtained through physical layer processing. In the example in FIG. 4A and FIG. 4B, a specific processing process at the physical layer is not specifically described.

Step 305: The non-AP MLD decrypts the second downlink data by using the first key.

In a scenario in this embodiment of this application, the non-AP MLD includes a first transmission link and the second transmission link. The first transmission link is used to perform data transmission with the current AP MLD, and the second transmission link is used to perform data transmission with the target AP MLD. The first transmission link and the second transmission link each have an independent physical layer and an independent lower-MAC layer, and the two transmission links share an upper-MAC layer. Specifically, when receiving the second downlink data from the target AP MLD, the non-AP MLD processes the second downlink data at a physical layer and a lower-MAC layer that correspond to the non-AP MLD (for example, at a physical layer and a lower-MAC layer that correspond to the target AP MLD in the non-AP MLD), and delivers processed data to the shared upper-MAC layer. In a process of upper-MAC layer processing, the non-AP MLD may decrypt the second downlink data by using the first key. As shown in FIG. 4A and FIG. 4B, the non-AP MLD includes two protocol stacks: a physical layer and lower-MAC layer protocol stack corresponding to the current AP MLD, and a physical layer and lower-MAC layer protocol stack corresponding to the target AP MLD. The current AP MLD and the target AP MLD share an upper-layer protocol stack. When receiving the second downlink data sent by the target AP MLD, the non-AP MLD may process the second downlink data at the physical layer corresponding to the target AP MLD, and transmit the second downlink data to the lower-MAC layer corresponding to the target AP MLD through the physical layer SAP. The lower-MAC layer processing includes but is not limited to at least one of the following: A-MPDU de-aggregation (A-MPDU de-aggregation), MPDU header CRC validation (MPDU header CRC validation), address 1 address filter (address 1 address filter), block acknowledgement scoreboard (block ack scoreboard), or the like. The non-AP MLD transmits the data obtained through lower-MAC layer processing corresponding to the target AP MLD to the upper-MAC layer. Upper-MAC layer processing includes but is not limited to at least one of the following: block acknowledgement scoreboard (block ack scoreboard), duplicate detection per SN (duplicate detection per SN), MPDU decryption (MPDU decryption), block acknowledgement buffering and reordering per SN (block ack buffering and reordering per SN), replay detection per PN (replay detection per PN), or the like.

It should be noted that, in this embodiment of this application, the non-AP MLD has two transmission links: the first transmission link connected to the current AP MLD and the second transmission link connected to the target AP MLD. Before switching or before roaming ends, the mapping relationship between the non-AP MLD and the current AP MLD is stored in the DS. In a downlink transmission process, when receiving downlink data whose destination address is the non-AP MLD, the DS sends the downlink data to the current AP MLD based on the mapping relationship between the non-AP MLD and the current AP MLD. Specific processing by the current AP MLD includes but is not limited to: 1. The current AP MLD sends all of the downlink data to the non-AP MLD through the first transmission link. 2. The current AP MLD sends a part of the downlink data to the non-AP MLD through the first transmission link, and transparently transmits the other part of the downlink data to the target AP MLD through the DS. The target AP MLD sends the other part of the downlink data to the non-AP MLD through the second transmission link. 3. The current AP MLD transparently transmits all of the downlink data to the target AP MLD through the DS. The target AP MLD sends all of the downlink data to the non-AP MLD through the second transmission link. In the procedure in FIG. 3, the following is mainly described: When receiving downlink data from the DS, the current AP MLD transparently transmits the downlink data to the target AP MLD through the DS. The target AP MLD sends the downlink data to the non-AP MLD. In a possible implementation, in the procedure in FIG. 3, the current AP MLD may transparently transmit all of the downlink data received from the DS to the target AP MLD through the DS. Alternatively, in the procedure in FIG. 3, the current AP MLD sends a part of the downlink data received from the DS to the non-AP MLD through the first transmission link. The current AP MLD transparently transmits the other part of the downlink data received from the DS to the target AP MLD through the DS. The target AP MLD sends the other part of the downlink data to the non-AP MLD through the second transmission link. The downlink data is divided into two parts that are sent to the non-AP MLD through different transmission links, to improve a transmission speed of the downlink data. Even, in another scenario, the current AP MLD duplicates the downlink data received from the DS. One duplicate is transmitted to the non-AP MLD through the first transmission link. The other duplicate is transparently transmitted to the target AP MLD through the DS. The target AP MLD sends the downlink data to the non-AP MLD, and the like through the second transmission link. In this way, transmission reliability of the downlink data can be improved. Even, the current AP MLD may send all or a part of to-be-sent downlink data of the current AP MLD to the target AP MLD, and the target AP MLD sends received downlink data to the non-AP MLD. In this embodiment of this application, a source of downlink data of the current AP MLD is not limited, and a focus is a process in which the current AP MLD and the target AP MLD each process the downlink data when the current AP MLD sends the downlink data to the target AP MLD.

### [Uplink data transmission]

In a design, in uplink data transmission, a non-AP MLD establishes two transmission links: a first transmission link with a current AP MLD, and a second transmission link with a target AP MLD. Before switching or before roaming ends, a mapping relationship between the current AP MDL and the non-AP MLD is stored on a DS side. To enable a DS to correctly process uplink data, the uplink data needs to be delivered to the current AP MLD, and then the current AP MLD delivers the uplink data to the DS. The non-AP MLD delivers the uplink data to the current AP MLD in manners that include but are not limited to the following several manners:
1. The non-AP MLD delivers the uplink data to the current AP MLD through the first transmission link.
2. The non-AP MLD delivers a part of the uplink data to the current AP MLD. The non-AP MLD delivers the other part of the uplink data to the target AP MLD. The target AP MLD transparently transmits the other part of the uplink data to the current AP MLD through the DS. The uplink data is divided into two duplicates that are transmitted to the current AP MLD through different links, to improve a transmission rate of the uplink data.
3. The non-AP MLD delivers all of the uplink data to the target AP MLD. The target AP MLD transparently transmits all of the uplink data to the current AP MLD, or the like through the DS.
4. The non-AP MLD may make two duplicates of the uplink data. One duplicate is directly sent to the current AP MLD through the first transmission link, and the other duplicate is sent to the target AP MLD through the second transmission link. The target AP MLD transparently transmits the uplink data to the current AP MLD through the DS. Same uplink data is transmitted through the two transmission links, to improve transmission reliability of the uplink data.

Manner 2, Manner 3, and Manner 4 all relate to the following process: The non-AP MLD sends the uplink data to the target AP MLD, and the target AP MLD transparently transmits the uplink data to the current AP MLD through the DS. In a possible implementation, Manner 1 to Manner 4 are merely examples for description, and are not intended to limit a scenario of uplink data transmission in this application.

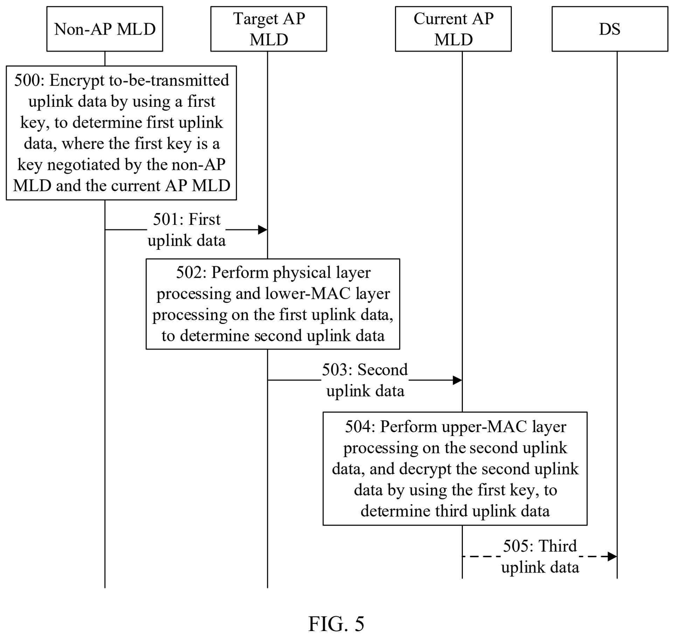

In a process of uplink data transmission provided in this embodiment of this application, when sending the uplink data to the target AP MLD, the non-AP MLD encrypts the uplink data by using a first key negotiated by the non-AP MLD and the current AP MLD. As shown in FIG. 5, a procedure is provided. The procedure is applicable to uplink data transmission, and includes the following steps.

Step 500: A non-AP MLD encrypts to-be-transmitted uplink data by using a first key, to determine first uplink data, where the first key is a key negotiated by the non-AP MLD and a current AP MLD.

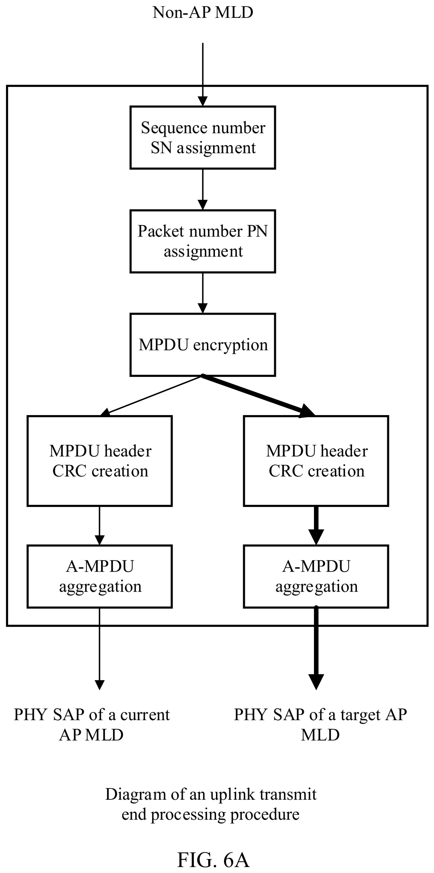

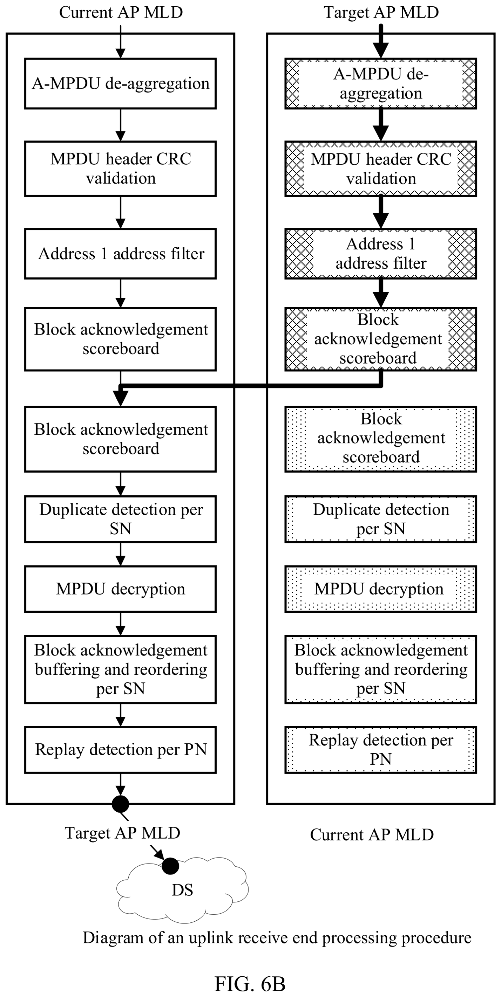

In a design, the non-AP MLD sequentially performs shared upper-MAC layer processing, exclusive lower-MAC layer processing, exclusive physical layer processing, and the like on the to-be-transmitted uplink data. Upper-MAC layer processing includes at least the following: encrypting the to-be-transmitted uplink data by using the first key negotiated by the non-AP MLD and the current AP MLD, and the like. As shown in FIG. 6A and FIG. 6B, upper-MAC layer processing by the non-AP MLD includes but is not limited to at least one of the following: sequence number SN assignment (SN assignment), packet number PN assignment (PN assignment), MPDU encryption (MPDU encryption), or the like. In MPDU encryption, the non-AP MLD encrypts the uplink data by using the first key negotiated with the current AP MLD. Further, the non-AP MLD includes two transmission links, and each transmission link exclusively occupies the lower-MAC layer and the physical layer. In other words, a first transmission link and a second transmission link each correspond to an independent lower-MAC layer and an independent physical layer. In this embodiment of this application, the non-AP MLD may process the uplink data at a lower-MAC layer and a physical layer that correspond to the second transmission link corresponding to the target AP MLD. For example, as shown in FIG. 6A and FIG. 6B, lower-MAC layer processing corresponding to the target AP MLD includes but is not limited to: MPDU header CRC creation (MPDU header CRC creation), A-MPDU aggregation (aggregation), and/or the like. In FIG. 6A and FIG. 6B, the lower-MAC layer of the target AP MLD delivers the uplink data to the physical layer of the target AP MLD through a physical layer SAP, and continues to perform physical layer processing on the uplink data. After physical layer processing, the uplink data is sent to the target AP MLD through the second transmission link.

Step 501: The non-AP MLD sends the first uplink data to the target AP MLD.

Step 502: The target AP MLD performs physical layer processing and lower-MAC layer processing on the first uplink data, to determine second uplink data.

As shown in FIG. 6A and FIG. 6B, lower-MAC layer processing by the target AP MLD includes but is not limited to at least one of the following: A-MPDU de-aggregation (A-MPDU de-aggregation), MPDU header CRC validation (MPDU header CRC validation), address 1 address filter (address 1 address filter), block acknowledgement scoreboard (block ack scoreboard), or the like.

Step 503: The target AP MLD sends the second uplink data to the current AP MLD.

Correspondingly, the current AP MLD receives the second uplink data from the target AP MLD. Alternatively, it may be described as follows: The current AP MLD receives the uplink data from the non-AP MLD through the target AP MLD. Alternatively, it may be described as follows: The non-AP MLD sends the second uplink data to the current AP MLD through the target AP MLD.

Step 504: The current AP MLD performs upper-MAC layer processing on the second uplink data, and decrypts the second uplink data by using the first key, to determine third uplink data.

As shown in FIG. 6A and FIG. 6B, upper-MAC layer processing by the current AP MLD includes but is not limited to at least one of the following: block acknowledgement scoreboard (block ack scoreboard), duplicate detection per SN (duplicate detection per SN), MPDU decryption (MPDU decryption), block acknowledgement buffering and reordering per SN (block ack buffering and reordering per SN), replay detection per PN (replay detection per PN), or the like.

It can be learned from step 502 to step 504 that, when the target AP MLD receives the uplink data from the non-AP MLD, the target AP MLD performs physical layer processing and lower-MAC layer processing on the received uplink data, bypasses (bypass) upper-MAC processing by the target AP MLD, and sends uplink data obtained through lower-MAC layer processing to the current AP MLD. After receiving the uplink data, the current AP MLD performs upper-MAC layer processing on the uplink data.

Step 505: The current AP MLD sends the third uplink data to a DS.

In a design, the current AP MLD may send the third uplink data to the DS, and the DS processes or applies the third uplink data, or the like. Alternatively, the third uplink data may be sent to the current AP MLD, and the current AP MLD may directly process or apply the third uplink data, or the like. In this case, the third uplink data does not need to be reported to the DS. In this case, step 505 does not need to be performed. Therefore, step 505 is optional.

This embodiment of this application further provides a procedure. The procedure is used to establish the second transmission link between the non-AP MLD and the target AP MLD. For example, the first transmission link is established between the non-AP MLD and the current AP MLD. In an implementation, the first transmission link may be considered as a data connection (data connection) between the non-AP MLD and the current AP MLD. A data path (data path) exists between the current AP MLD and the DS, and a mapping relationship between the non-AP MLD and the current AP MLD is stored in the DS. The current AP MLD finds, through measurement, that link quality of the first transmission link between the non-AP MLD and the current AP MLD deteriorates, for example, the link quality of the first transmission link is lower than or equal to a threshold. In this case, the current AP MLD may enable the non-AP MLD to perform beacon measurement. The current AP MLD recommends, to the non-AP MLD based on a beacon measurement result reported by the non-AP MLD, an AP MLD to which the non-AP MLD is to be switched. The non-AP MLD selects one AP MLD from the recommended AP MLD, and the AP MLD serves as the target AP MLD. In an implementation, the non-AP MLD reports the target AP MLD selected by the non-AP MLD to the current AP MLD. In an implementation, the current AP MLD may send a seventh request to the non-AP MLD. The seventh request further includes second indication information, and the second indication information indicates the non-AP MLD to reserve BA session information and/or context information of the non-AP MLD and buffer data that is not sent by the non-AP MLD. When receiving the second indication information, the non-AP MLD may reserve the BA session information and/or the context information in a subsequent tentative association process. In an implementation, the non-AP MLD may send a seventh response to the current AP MLD. The seventh response is a response to the seventh request. In an implementation, the seventh request may be a BSS transition management (transition management, BTM) request frame, and the seventh response may be a BTM response frame.

### [Tentative association]

A non-AP MLD may make a tentative association with a target AP MLD by using an affiliated (affiliated) STA. In a process of the tentative association, the non-AP MLD may establish a second transmission link with the target AP MLD. Further, a transmission capability parameter of the non-AP MLD and the target AP MLD (for example, a transmission bandwidth and a maximum quantity of streams of the non-AP MLD and the target AP MLD), key information of the non-AP MLD and the target AP MLD (for example, a PTK, a group temporal key (group temporal key, GTK), an integrity group temporal key (integrity group temporal key, IGTK), and a beacon integrity group temporal key (beacon integrity group temporal key, BIGTK)), and resource allocation information of the non-AP MLD and the target AP MLD (for example, a BA session and a restricted target wakeup time (restricted target wakeup time, r-TWT) establishment) between the non-AP MLD and the target AP MLD may be negotiated.

In a design, the non-AP MLD may send a first request to the target AP MLD. The first request is used to request to establish the second transmission link between the non-AP MLD and the target AP MLD. The target AP MLD sends a first response to the non-AP MLD. The first response is a response to the first request. For example, the non-AP MLD may send the first request to the target AP MLD. The first request is used to request to establish the second transmission link. When receiving the first request, the target AP MLD may send the first response to the non-AP MLD. The first response indicates that the target AP MLD agrees to establish the second transmission link, and indicates at least one of the transmission capability parameter, the key information, the resource allocation information, or the like of the target AP MLD and the non-AP MLD. The target AP MLD sends the first response to the non-AP MLD. The first response may include at least one of the transmission capability parameter of the target AP MLD and the non-AP MLD, the key information, the resource allocation information of the target AP MLD and the non-AP MLD, or the like that is negotiated by the target AP MLD and the non-AP MLD.

In an implementation, the first request may be a reassociation request (reassociation request) frame and carries tentative association indication information. The reassociation request frame carrying the tentative association indication information is used by the non-AP MLD to request the tentative association with the target AP MLD. The first response may be a reassociation response (reassociation response) frame and carry tentative association indication information, and the reassociation response frame carrying the tentative association indication information is used to implement the tentative association between the non-AP MLD and the target AP MLD. In a process of the tentative association, the non-AP MLD and the target AP MLD may establish the second transmission link and negotiate various parameters.

In another implementation, the first request may be a newly defined action frame and carries same content as a reassociation request (reassociation request) frame, and the first request is used by the non-AP MLD to request the tentative association with the target AP MLD. The first response may be a newly defined action frame and carries same content as a reassociation response (reassociation response) frame, and the first response is used to implement the tentative association between the non-AP MLD and the target AP MLD. In a process of the tentative association, the non-AP MLD and the target AP MLD may establish the second transmission link and negotiate various parameters.

It should be noted that, in the process of the tentative association, the target AP MLD does not refresh a mapping relationship that is between the non-AP MLD and a current AP MLD and that is stored on a DS side. Before sending the first request (for example, the reassociation request frame), the non-AP MLD does not delete a first key negotiated with the current AP MLD, and does not clear a transmit buffer, a receive buffer, or the like. The non-AP MLD still maintains a first transmission link with the current AP MLD, and uplink data and/or downlink data may still be transmitted between the non-APP MLD and the current AP MLD through the first transmission link.

In an implementation, the first request may include indication information for enabling dual-link transmission of the non-AP MLD, and the dual links include the first transmission link between the non-AP MLD and the current AP MLD, the second transmission link between the non-AP MLD and the target AP MLD, and the like. After the target AP MLD obtains the indication information and successfully establishes the second transmission link, the target AP MLD initiates negotiation of dual-link transmission to the current AP MLD, to enable dual-link transmission.

### [Dual-link transmission]

In a process of dual-link roaming, data needs to be transmitted between a current AP MLD and a target AP MLD. Therefore, when obtaining, based on a first request, an indication of a non-AP MLD for enabling dual-link transmission, the target AP MLD may send a second request to the current AP MLD. The second request is used to request to enable the dual-link transmission of the non-AP MLD. In dual-link downlink transmission, the current AP MLD may transparently transmit encrypted downlink data of the non-AP MLD to the target AP MLD, and then the target AP MLD sends the downlink data to the non-AP MLD. In dual-link uplink transmission, the target AP MLD may transparently transmit uplink data received from the non-AP MLD to the current AP MLD, and the current AP MLD decrypts the uplink data and sends the decrypted uplink data to a DS, or the like. For a specific process, refer to [uplink data transmission] and [downlink data transmission] in the foregoing descriptions. In an implementation, the current AP MLD may send a second response to the target AP MLD. The second response is a response to the second request. For example, the second response may include indication information indicating whether the current AP MLD agrees to enable dual-link transmission.

In a design, dual-link transmission in a roaming process may be described as roaming transmission based on a dual active protocol stack (dual active protocol stack, DAPS). The roaming transmission based on the DAPS may mean that a non-AP MLD that performs simultaneous transmitting and receiving on a plurality of links may simultaneously perform uplink and/or downlink transmission with the current AP MLD and the target AP MLD during roaming. For example, the second request may be a DAPS enable request (DAPS enable request), and the second response may be a DAPS enable response (DAPS enable response).

In a design, the target AP MLD may send, to the current AP MLD, a maximum MAC layer MPDU length supported by the target AP MLD, a maximum quantity of aggregated MAC layer MSDUs that are allowed by the target AP MLD, and/or the like. Then, data sent by the current AP MLD to the target AP MLD needs to meet the foregoing requirement. In an implementation, the second request may include the maximum MAC layer MPDU length supported by the target AP MLD, the maximum quantity of aggregated MAC layer MSDUs that are allowed by the target AP MLD, and/or the like. In an implementation, the target AP MLD may further send an MLD address corresponding to the non-AP MLD to the current AP MLD, and the like.

Similarly, the current AP MLD may also send, to the target AP MLD, a maximum MAC layer MPDU length supported by the current AP MLD, a maximum quantity of aggregated MAC layer MSDUs that are allowed by the current AP MLD, and/or the like. Then, data sent by the target AP MLD to the current AP MLD needs to meet the foregoing requirement. In this embodiment of this application, a manner in which the current AP MLD sends, to the target AP MLD, the maximum MAC layer MPDU length supported by the current AP MLD, the maximum quantity of aggregated MAC layer MSDUs that are allowed by the current AP MLD, and/or the like is not limited.

In a possible implementation, data transmission between the target AP MLD and the current AP MLD may be forwarded through the DS. In this embodiment of this application, whether the DS performs related processing and/or related operations on data in a data forwarding process is not limited. If the DS does not perform any related operation or processing on the data, it may be referred to as transparent transmission of the DS. In a design, the current AP MLD may encapsulate data into a special frame or message and transparently transmit the frame or message to the target AP MLD through the DS. In a possible implementation, "transparent transmission" in related descriptions in this embodiment of this application may be replaced with related descriptions such as sending or forwarding. If the DS performs corresponding operations and/or processing on received data in the data forwarding process, this also falls within the protection scope of this embodiment of this application. Alternatively, data may be directly transmitted between the target AP MLD and the current AP MLD. This is not limited.

### [Data path switching]

A non-AP MLD may trigger data path switching. For example, a transmission path of the non-AP MLD is switched from a current AP MLD to a target AP MLD. In a possible implementation, after data path switching, the non-AP MLD encrypts/decrypts uplink data and/or downlink data, and the like by using a second key negotiated with the target AP MLD. In an implementation, the second key may be a PTK.

In an implementation, in this embodiment of this application, a condition for triggering data path switching by the non-AP MLD is not limited. For example, the non-AP MLD may trigger data path switching when a first condition is met. The first condition includes but is not limited to the following: link quality of an optimal link of the target AP MLD is higher than link quality of an optimal link of the current AP MLD, and the like.

It should be noted that, during roaming, the non-AP MLD simultaneously performs data transmission through a first transmission link and a second transmission link. When roaming ends, the non-AP MLD may perform data path switching. In a description, in a data path switching process, the non-AP MLD disconnects the first transmission link, and completely uses the second transmission link to perform data transmission. Alternatively, in another description, it may be learned from the foregoing example in FIG. 2 that in dual-link transmission, the non-AP MLD establishes a transmission link with each of the current AP MLD and the target AP MLD by using different STA entities. For example, as described in FIG. 2, in a roaming process, a STA 1 in the non-AP STA establishes the first transmission link with the current AP MLD, and a STA 2 in the non-AP MLD establishes the second transmission link with the target AP MLD. In the data path switching process, the STA 1 disconnects the first transmission link with the current AP MLD, and the STA 1 establishes another transmission link with the target AP MLD.

In a design, in a process in which the non-AP MLD triggers path switching, the non-AP MLD may send a third request to the target AP MLD. The third request is used to request to trigger path switching of the non-AP MLD (for example, the switching may be data path switching). In an implementation, the target AP MLD may send a third response to the non-AP MLD. The third response may be a response to the third request. For example, the third response may include indication information indicating whether to agree path switching. If the target AP MLD agrees path switching of the non-AP MLD, the target AP MLD may send a fourth request to a DS. The fourth request is used to request the DS to update a stored mapping relationship between the non-AP MLD and the current AP MLD to a mapping relationship between the non-AP MLD and the target AP MLD. In an implementation, the DS may send a fourth response to the target AP MLD. The fourth response may be a response to the fourth request. In an implementation, the fourth response may include indication information indicating whether the DS agrees to update the mapping relationship. Alternatively, the target AP MLD may send an uplink data packet to the DS through a MAC SAP. The DS automatically updates, based on information that is about the non-AP MLD and that may be carried in the uplink data packet, the mapping relationship and the like stored in the DS.

In an implementation, the third request is a STA-to-AP mapping request (STA-to-AP mapping request) frame, and the third response is a STA-to-AP mapping response (STA-to-AP mapping response). The fourth request is an updated or newly added DS-STA-notify request (notify request), and the fourth response may be a DS-STA-notify response (notify response).

Further, after the target AP MLD receives the third request and before the target AP MLD sends the fourth request to the DS, the method further includes: The target AP MLD sends a context transfer request (context transfer request) to the current AP MLD; and the target AP MLD receives a context transfer response (context transfer response) sent by the current AP MLD. The context transfer response includes context information of the non-AP MLD.

In an implementation, the context transfer response further includes at least one of the following: a block acknowledgement protocol of a traffic identifier (traffic identifier, TID), a window start position of a transmit buffer of the TID, a window size of the transmit buffer of the TID, a window start position of an uplink receive end scoreboard, a window size of the uplink receive end scoreboard, a window start position of a receive reordering buffer, a window size of the receive reordering buffer, a currently received maximum packet number PN value, or an uplink replay counter.

In a design, the target AP MLD receives the third request from the non-AP MLD. The third request is used to request path switching. The target AP MLD sends the context transfer request to the current AP MLD. The target AP MLD receives the context transfer response from the current AP MLD. The target AP MLD waits for a period of time, and then sends the fourth request to the DS, to refresh the mapping relationship stored on a DS side. In this way, it can be ensured that uplink delivery is not out of order. A reason is as follows: Before the mapping relationship stored on the DS side is updated, the uplink data is delivered to the DS through the current AP MLD. At a moment at which the transmission path of the non-AP MLD is switched from the first transmission path to the second transmission path, that is, when the target AP MLD receives the context transfer response of the current AP MLD, processing of the uplink data delivered by the current AP MLD to the DS may not be completed. Therefore, in this embodiment of this application, when receiving the context transfer response of the current AP MLD, the target AP MLD waits for a period of time. In this case, the fourth request for refreshing the mapping relationship is sent to the DS when the DS completes processing of the uplink data of the current AP MLD. Alternatively, before sending the context transfer response, the current AP MLD needs to ensure that all uplink data of the current AP MLD is successfully delivered to the DS. For example, in an implementation, the current AP MLD sends the context transfer response to the target AP MLD after the current AP MLD sends, to the DS, a sixth request used to delete the mapping relationship between the non-AP MLD and the current AP MLD. For the sixth request, refer to the following descriptions.

In an implementation, the non-AP MLD may further send a fifth request to the current AP MLD when the non-AP MLD determines to trigger path switching. The current AP MLD receives the fifth request sent by the non-AP MLD. The fifth request is used to request to cut off an association between the non-AP MLD and the current AP MLD. When receiving the fifth request, the current AP MLD may disconnect the first transmission link with the non-AP MLD. In an implementation, the fifth request includes first indication information, and the first indication information indicates the current AP MLD to reserve BA information and/or context information of the non-AP MLD and buffer data that is not sent by the non-AP MLD. The current AP MLD sends the sixth request to the DS after the current AP MLD receives the fifth request. The sixth request is used to request to delete the mapping relationship that is between the non-AP MLD and the current AP MLD and that is stored in the DS. When receiving the sixth request, the DS may delete the mapping relationship that is between the non-AP MLD and the current AP MLD and that is stored in the DS. In an implementation, the current AP MLD may actively trigger the non-AP MLD to perform a BSS transition. For example, the current AP MLD actively triggers the non-AP MLD to switch to the target AP MLD. In this case, the current AP MLD may send the fifth request to the non-AP MLD. The fifth request is used to cut off an association between the current AP MLD and the non-AP MLD.

In an implementation, the fifth request may be a disassociation (disassociation) frame, and the sixth request may be a DS-STA-notify request (DS-STA-NOTIFY request) for deletion.

In a design, the non-AP MLD may not send the fifth request to the current AP MLD. In this case, when the current AP MLD receives the context transfer request of the target AP MLD, and does not receive the fifth request sent by the non-AP MLD, the current AP MLD may stop delivering the uplink data to the DS, and the current AP MLD sends the sixth request to the DS. The sixth request is used to request to delete the mapping relationship that is between the non-AP MLD and the current AP MLD and that is stored in the DS. Then, the current AP MLD sends the context transfer response to the target AP MLD.

It should be noted that, in the foregoing descriptions, the target AP MLD may send the fourth request to the DS. The fourth request is used to request the DS to update the stored mapping relationship between the non-AP MLD and the current AP MLD to the mapping relationship between the non-AP MLD and the target AP MLD. In the foregoing descriptions, the current AP MLD may send the sixth request to the DS. The sixth request is used to request to delete the mapping relationship that is between the non-AP MLD and the current AP MLD and that is stored in the DS. In a design, the DS first performs the following operations: receiving the sixth request, and deleting the mapping relationship that is between the non-AP MLD and the current AP MLD and that is stored in the DS. Then, the DS receives the fourth request. The fourth request is used to newly add the mapping relationship between the non-AP MLD and the target AP MLD in storage of the DS. In other words, updating the mapping relationship in the fourth request may also indicate to newly add the mapping relationship between the non-AP MLD and the target AP MLD. Alternatively, when receiving the fourth request, the DS directly updates the mapping relationship stored in the DS, for example, replaces the mapping relationship that is between the non-AP MLD and the current AP MLD and that is stored in the DS with the mapping relationship between the non-AP MLD and the target AP MLD. In this case, the current AP MLD may no longer send, to the AP MLD, the sixth request used to delete the mapping relationship.

For the DS side, after receiving the fourth request from the target AP MLD, the DS may switch a data path (data path). For example, the DS deletes a data path between the non-AP MLD and the current AP MLD, and the DS adds a data path between the non-AP MLD and the target AP MLD. After the current AP MLD successfully sends the context transfer response, the current AP MLD may release (release) a context of the non-AP MLD.

In this embodiment of this application, the current AP MLD further needs to send, to the target AP MLD, downlink data and/or uplink data that meet the following condition. For example, in a design, when receiving the context transfer request from the target AP MLD, the current AP MLD may send the following described downlink data and/or uplink data to the target AP MLD. The following described downlink data and/or the uplink data may be carried in the context transfer response. Alternatively, before or after the current AP MLD sends the context transfer response to the target AP MLD, the current AP MLD may send the following described uplink data and/or downlink data, or the like to the target AP MLD. This is not limited.

For example, for downlink data transmission, the current AP MLD needs to forward (unencrypted) downlink data to the target AP MLD, and use a last piece of downlink data to carry an end identifier. In an implementation, the downlink data may be an MSDU or an MPDU. For downlink data in a format of an MPDU, a more data (more data) field in a header (header) of the MPDU may be reused. For example, when the MPDU is a last piece of downlink data, the more data field is set to a first value; or when the MPDU is not a last piece of downlink data, the more data field is set to a second value. In an implementation, the first value may be 0, and the second value may be 1. When receiving the downlink data forwarded by the current AP MLD, the target AP MLD encrypts the downlink data by using the second key, and then sends the downlink data to the non-AP MLD.

For example, for uplink data transmission, the current AP MLD may forward, to the target AP MLD, uplink data (for example, a decrypted MSDU or MPDU) obtained through upper-MAC layer processing in a receive buffer, and store the uplink data in a receive reordering buffer, and then the target AP MLD sequentially sends the received complete and continuous uplink data to the DS.

In a design, during switching, the non-AP MLD disconnects an old link with the current AP MLD, and then establishes a new link with the target AP MLD. Before the non-AP MLD establishes the new link with the target AP MLD, the non-AP clears a transmit buffer and the receive buffer, thereby causing a packet loss. The receive buffer is used to store discontinuous data received by the non-AP MLD, and the transmit buffer is used to store data that is not sent by the non-AP MLD or that is sent by the non-AP MLD but is not acknowledged by a receive end. In the solution of this embodiment of this application, the non-AP MLD first establishes the second transmission link with the target AP MLD. In this period, the non-AP MLD and the current AP MLD do not clear the transmit buffer or the receive buffer, and the non-AP MLD and the current AP MLD still perform data transmission, thereby avoiding a packet loss. Then, at a time point, the non-AP MLD disconnects the first transmission link with the current AP MLD, and transfers a transmission session or a block acknowledgement (block ack, BA) session to the target AP MLD. In the switching process, the non-AP MLD may simultaneously perform data transmission with the current AP MLD and the target AP MLD based on a multi-link capability, thereby reducing a risk of a rate drop in the switching process.

### [Embodiment 1]

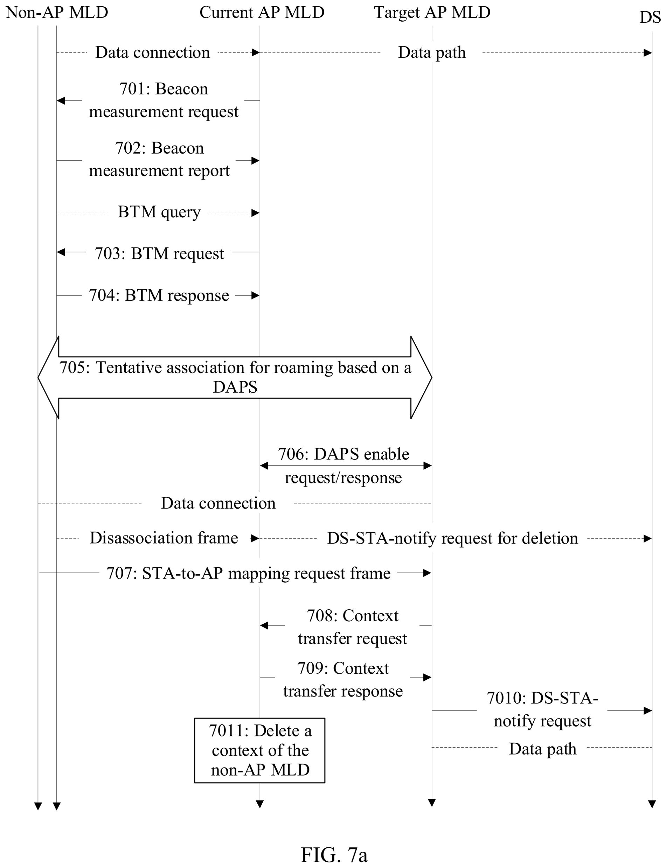

In this embodiment of this application, a second transmission link is directly established between a non-AP MLD and a target AP. One or both of the foregoing first request and third request are transmitted through an air interface between the non-AP MLD and the target AP MLD. As shown in FIG. 7a, a procedure is provided. It should be noted that, before the procedure in FIG. 7a is performed, a first transmission link exists between the non-AP MLD and a current AP MLD. For example, a data connection exists between the non-AP MLD and the current AP MLD. A data path exists between the current AP MLD and a DS, and a mapping relationship between the non-AP MLD and the current AP MLD is stored in the DS. As shown in FIG. 7a, the procedure includes the following steps.

Step 701: The current AP MLD finds that link quality of the non-AP MLD deteriorates, and the current AP MLD sends a beacon (beacon) measurement request to the non-AP MLD.

Step 702: The non-AP MLD performs beacon measurement, and feeds back a beacon measurement report to the current AP MLD.

Step 703: The current AP MLD recommends, based on the beacon measurement report, the non-AP MLD to switch to a neighboring AP MLD. For example, the current AP MLD sends a BTM request frame to the non-AP MLD. The BTM request frame includes indication information of at least one AP MLD recommended by the current AP MLD. The non-AP MLD selects one AP MLD from the at least one recommended AP MLD as the target AP MLD.

In an implementation, the BTM request frame includes second indication information, and the second indication information indicates the non-AP MLD to reserve BA information and/or context information of the non-AP MLD and buffer data that is not sent by the non-AP MLD. When obtaining the second indication information, the non-AP MLD may enable dual-link roaming based on a DAPS.

In an implementation, before the current AP MLD sends the BTM request frame to the non-AP MLD, the method may further include: The non-AP MLD sends a BTM query frame to the current AP MLD. After receiving the BTM query frame, the current AP MLD sends the BTM request frame to the current AP MLD.

Step 704: The non-AP MLD sends a BTM response frame to the current AP MLD, where the BTM response frame includes the target AP MLD selected by the non-AP MLD.

Step 705: The non-AP MLD makes a tentative association with the target AP MLD. In a process of the tentative association, the following process may be implemented: establishing the second transmission link between the target AP MLD and the non-AP MLD, for example, a bandwidth of the second transmission link and a supported maximum quantity of streams; establishing a BA session; and negotiating a key, where the negotiated key includes a second key for communication between the target AP MLD and the non-AP MLD.

In an implementation, the non-AP MLD and the target AP MLD may implement the tentative association by using a reassociation request frame and a reassociation response frame. For the reassociation request frame and the reassociation response frame, refer to the foregoing descriptions of the first request and a first response. In a possible implementation, in a process of the tentative association, a mapping relationship that is between the non-AP MLD and an AP MLD and that is stored on a DS side is not refreshed. In this case, the mapping relationship between the non-AP MLD and the current AP MLD is stored on the DS side. In this case, when receiving downlink data of the non-AP MLD, the DS delivers the downlink data to the current AP MLD.

Step 706: After the non-AP MLD and the target AP MLD complete the tentative association, the target AP MLD and the current AP MLD may enable DAPS-based roaming by exchanging a DAPS enable request and a DAPS enable response.

For the DAPS enable request and the DAPS enable response, refer to the foregoing descriptions of the second request and the second response.

Step 707: The non-AP MLD triggers path switching. The non-AP MLD sends a STA-to-AP mapping request frame to the target AP MLD. The STA-to-AP mapping request frame may be used to request the target AP MLD to perform path switching. For the STA-to-AP mapping request frame, refer to the foregoing third request.

Step 708: The target AP MLD sends a context transfer request to the current AP MLD.

Step 709: The current AP MLD sends a context transfer response to the target AP MLD. For content carried in the context transfer response, refer to the foregoing descriptions.

Step 7010: The target AP MLD sends a DS-STA-notify request to the DS.

When receiving the DS-STA-notify request (notify request), the DS may update a stored mapping relationship from the mapping relationship between the non-AP MLD and the current AP MLD to a mapping relationship between the non-AP MLD and the target AP MLD. The DS disconnects a data path with the current AP MLD, and establishes a data path with the target AP MLD. For the DS-STA-notify request (notify request), refer to the foregoing descriptions of the fourth request.

Step 7011: The current AP MLD deletes a context of the non-AP MLD.

After step 7011, a transmission path of the non-AP MLD is switched from a first transmission path to a second transmission path.

The non-AP MLD and the target AP MLD may encrypt/decrypt uplink data and/or the downlink data by using the negotiated second key.

In an implementation, when the non-AP MLD determines to trigger path switching in step 707, the method further includes: The non-AP MLD sends a disassociation frame to the current AP MLD. For the disassociation frame, refer to the foregoing fifth request. The current AP MLD may send a DS-STA-notify request (notify request) for deletion to the DS. The DS deletes the mapping relationship that is between the non-AP MLD and the current AP MLD and that is stored in the DS.

In this embodiment of this application, transmission between the current AP MLD and the target AP MLD is transparent transmission performed through the DS. In this embodiment of this application, transmission between the current AP MLD and the target AP MLD includes but is not limited to the DAPS enable request, the DAPS enable response, the context transfer request, the context transfer response, or the like. In addition, the uplink data and/or the downlink data may be further transmitted between the current AP MLD and the target MLD. For details, refer to the foregoing descriptions of [uplink data transmission] and [downlink data transmission].

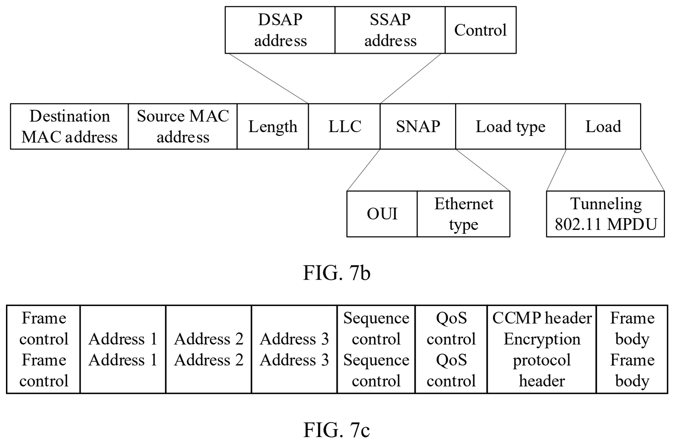

In a design, the following frame format may be used for information and/or data transmitted between the AP MLD and the target AP MLD. As shown in FIG. 7b, the frame format includes at least one of the following fields:
a destination MAC address (destination MAC address): a MAC address that may carry 48 bits;
a source MAC address (source MAC address): a MAC address that may carry 48 bits;
a length field;
a logical link control (logical link control, LLC) field, including a destination service access point (destination service access point, DSAP) address (the field is fixed to AA), a destination service access point (destination service access point, SSAP) address (the field is fixed to AA), and a control (Control) field (the field is fixed to 0x03);
a subnetwork access protocol (subnetwork access protocol, SNAP) field, including an organizationally unique identifier (organizationally unique identifier) field and an Ethernet type (Ethernet type) field;
a payload type (payload type) field: The field may be set to one or more preset values based on different payloads (payload); and
a payload (payload) field: For example, the payload field may carry the DAPS enable request, the DAPS enable response, the context transfer request, the context transfer response, or the uplink/downlink data that needs to be transparently transmitted. The payload field may carry an MPDU that conforms to a tunneling (tunneling) 802.11 protocol, and the like.

It should be noted that, when the uplink/downlink data is transparently transmitted between the current AP MLD and the target AP MLD, for information carried in the payload field, refer to construction of additional authentication data (additional authentication data, AAD) of a cipher-block chaining message authentication code protocol (cipher-block chaining message authentication code protocol, CCMP), and a CCMP header and an encrypted frame body are carried. In a design, as shown in FIG. 7c, the payload field includes at least one of the following fields: frame control (frame control), address 1 (address 1), address 2 (address 2), address 3 (address 3), sequence control (sequence control), quality of service (quality of service, QoS) control (QoS control), an encryption protocol header (CCMP header), a frame body (frame body), or the like.

In an implementation, the payload field may further include at least one of the following fields: a retry (retry) field, a power management (power management) field, a data field, a +high throughput control (high throughput control, HTC) field, a QoS field except a TID field, or the like. Further, when the payload field carries the foregoing field, a specific value of the foregoing field may be set to null.

According to Embodiment 1, in a switching or roaming process of the non-AP MLD, the non-AP MLD establishes dual links between the current AP MLD and the target AP MLD based on a multi-link capability, to implement data transmission by using both the current AP MLD and the target AP MLD, thereby improving a transmission rate and transmission reliability during roaming. Further, in the roaming process, the non-AP MLD does not disconnect the first transmission link with the current AP MLD, and does not clear a transmit buffer and a receive buffer of the non-AP MLD, thereby reducing a probability of a packet loss and/or interruption during the roaming.

### [Embodiment 2]

In this embodiment of this application, a second transmission link between a non-AP MLD and a target AP is established through a current AP MLD and a DS. One or both of the foregoing first request and third request are transmitted through the current AP MLD and the DS. For example, the non-AP MLD may send one or both of the first request and the third request to the current AP MLD, and the current AP MLD sends the first request and/or the third request to the target AP MLD through transparent transmission of the DS.

For the non-AP MLD, there is also an important device type, namely, an enhanced multi-link single radio (enhanced multi-link single radio, EMLSR) non-AP MLD. In a design, the EMLSR non-AP MLD means that the EMLSR non-AP MLD has a plurality of receive radio frequency chains and may simultaneously monitor a plurality of links. When an initial control frame sent by an AP MLD is received, a radio frequency chain of another link in an EMLSR link set may be switched to a corresponding link that receives the initial control frame, to increase a quantity of to-be-received/sent streams. That is, at any moment, the EMLSR non-AP MLD can select only one link to receive/send data. Compared with a multi-radio (radio) non-AP MLD, the eMLSR non-AP MLD has only one transceiver with a complete function, and the other transceivers are lower-cost machines with a limited function (because only a specific initial control frame can be received). Therefore, the eMLSR non-AP MLD has much lower costs, but has much lower performance than the multi-radio non-AP MLD. The EMLSR non-AP MLD can receive/send data only on one link. When the EMLSR non-AP MLD makes a tentative association with the target AP MLD based on the solution in Embodiment 1, the EMLSR non-AP MLD needs to jump to a corresponding channel of the target AP MLD to perform a tentative association operation. This causes interruption of data transmission with the current AP MLD, and severely affects roaming performance of the EMLSR non-AP MLD. Therefore, Embodiment 2 provides a solution, to further improve roaming performance of the non-AP MLD, and in particular, improve roaming performance of a non-AP MLD with a single-radio (radio) link and the EMLSR non-AP MLD.

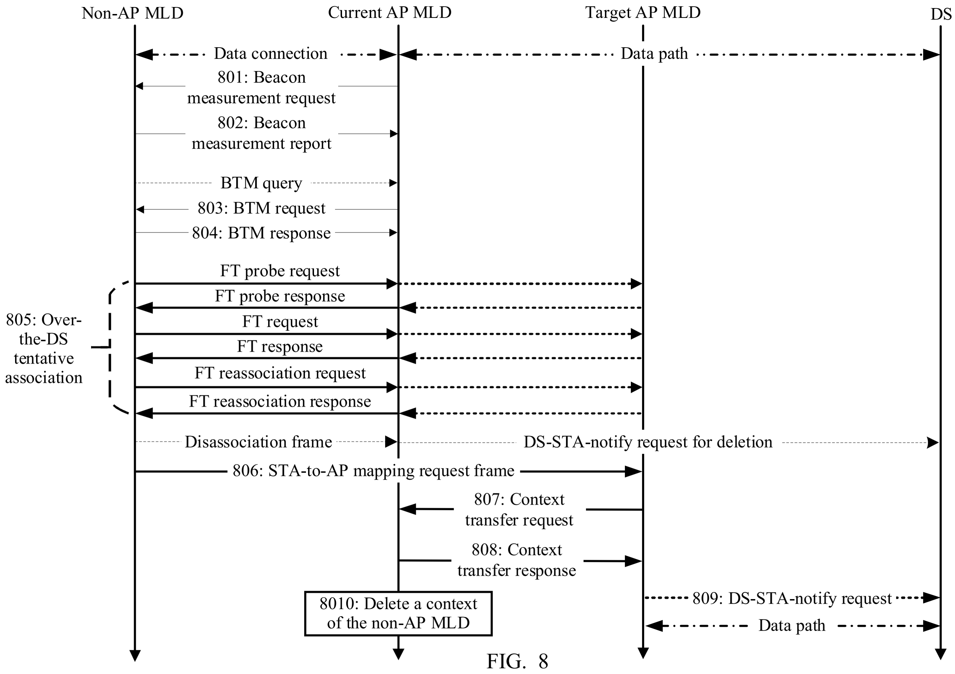

As shown in FIG. 8, a procedure is provided. Before the procedure in FIG. 8 is performed, a first transmission link is established between the non-AP MLD and the current AP MLD, and the first transmission link is also referred to as a data connection between the current AP MLD and the non-AP MLD. A data path exists between the DS and the current AP MLD, and a mapping relationship between the non-AP MLD and the current AP MLD is stored in the DS. As shown in FIG. 8, the procedure includes the following steps.

Step 801: The current AP MLD finds that link quality of the non-AP MLD deteriorates, and the current AP MLD sends a beacon (beacon) measurement request to the non-AP MLD.

Step 802: The non-AP MLD performs beacon measurement, and feeds back a beacon measurement report to the current AP MLD.

Step 803: The current AP MLD recommends, based on the beacon measurement report, the non-AP MLD to switch to a neighboring AP MLD. For example, the current AP MLD sends a BTM request frame to the non-AP MLD. The BTM request frame includes indication information of at least one AP MLD recommended by the current AP MLD. The non-AP MLD selects one AP MLD from the at least one recommended AP MLD as the target AP MLD.

In an implementation, before the current AP MLD sends the BTM request frame to the non-AP MLD, the method may further include: The non-AP MLD sends a BTM query frame to the current AP MLD. After receiving the BTM query frame, the current AP MLD sends the BTM request frame to the current AP MLD.

Step 804: The non-AP MLD sends a BTM response frame to the current AP MLD, where the BTM response frame includes the target AP MLD selected by the non-AP MLD.

Step 805: The non-AP MLD and the target AP MLD make a tentative association, where the tentative association may be an over-the-DS tentative association (over-the-DS tentative reassociation).

To implement that data transmission with the current AP MLD is not interrupted when the non-AP MLD and the target AP MLD perform a tentative association operation, an over-the-DS (Over-the-DS) tentative association operation manner is defined. That is, the non-AP MLD may perform a tentative association operation with the target AP MLD through the current AP MLD.

For example, the non-AP may send the first request to the current AP MLD. The first request is used to request to establish the second transmission link between the non-AP MLD and the target AP MLD. After receiving the first request, the current AP MLD transparently transmits the first request to the target AP MLD through the DS. The target AP MLD may establish the second transmission link between the target AP MLD and the non-AP MLD based on the first request. The second transmission link may be an air interface link between the non-AP MLD and the target AP MLD. In an implementation, the target AP MLD may send a first response to the current AP MLD through transparent transmission of the DS. The current AP MLD sends the first response to the non-AP MLD. In an implementation, the first request and the first response may be respectively a fast BSS transition (fast BSS transition, FT) probe request (probe request) and an FT probe response (probe response).

In an implementation, when the first request is transmitted through the current AP MLD and the DS, the first request does not include operating channel information (operating channel information, OCI), thereby reducing signaling overheads of the first request.

The non-AP MLD sends an eighth request to the current AP MLD, and the current AP MLD transparently transmits the eighth request to the target AP MLD through the DS. The eighth request is used to request a communication parameter of the target AP MLD. The target AP MLD sends an eighth response to the current AP MLD through the DS, and the current AP MDL sends the eighth response to the non-AP MLD. The eighth response includes a second key negotiated by the non-AP MLD and the target AP MLD. In an implementation, the eighth request and the eighth response may be respectively an FT request and an FT response.

The non-AP MLD sends a ninth request to the current AP MLD, and the current AP MLD transparently transmits the ninth request to the target AP MLD through the DS. The ninth request is used to negotiate a link operation parameter, and the like between the non-AP MLD and the target AP MLD. The target AP MLD sends a ninth response to the current AP MLD through the DS, and the current AP MLD sends the ninth response to the non-AP MLD. The ninth response includes a link operation parameter, and the like between the non-AP MLD and the target AP MLD. In an implementation, the ninth request and the ninth response may be respectively an FT reassociation (reassociation) request and an FT reassociation (reassociation) response.

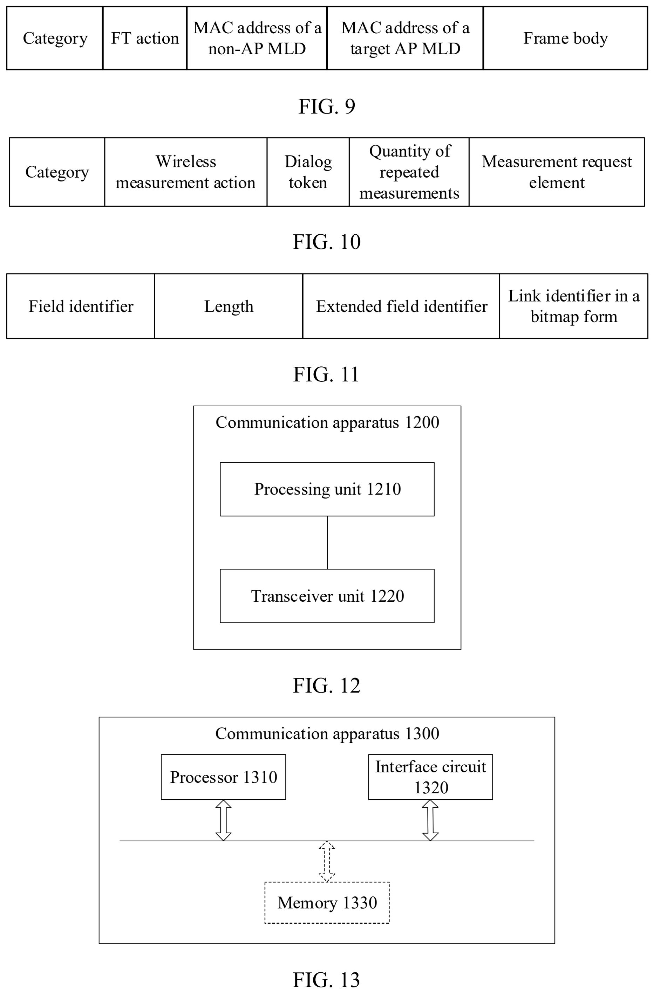

In a design, as shown in FIG. 9, the foregoing FT action frame (including but not limited to the foregoing FT query request, FT query response, FT request, FT response, FT reassociation request, and FT reassociation response) transparently transmitted between the non-AP MLD and the target AP MLD through the DS and the current AP MLD includes at least one of the following fields: a category (category), an FT action (action), a MAC address of the non-AP MLD, a MAC address of the target AP MLD, and a frame body (frame body).

The category field indicates a category to which the FT action frame belongs. The FT action field includes a value corresponding to an FT, and different values are set for FT action fields corresponding to different FT action frames. For example, refer to Table 1.

**Table 1**

| FT action field value | Description Description |
|---|---|
| FT action field value | |
| 0 | Reserved Reserved |
| 1 | FT request frame FT request frames |
| 2 | FT response frame FT response frames |
| 3 | FT acknowledgement frame FT Confirm frames |
| 4 | FT acknowledgement frame FT ack frames |
| 5 | FT probe request FT probe request |
| 6 | FT probe response FT probe response |
| 7 | FT reassociation request FT reassociation request |
| 8 | FT reassociation response FT reassociation response |
| 9-255 | Reserved Reserved |

It can be learned that, when the FT action frame in FIG. 9 is used as an FT reassociation request, a value set for the FT action field is 7. When the action frame in FIG. 9 is used as an FT reassociation response, a value set for the FT action field is 8. The foregoing FT query request, FT query response, FT request, FT response, and the like may be in a format of the FT action frame in FIG. 9. A difference is that the FT action field value in Table 1 is set to a corresponding value.

The non-AP MLD field includes a MAC layer address of the non-AP MLD. Specifically, the MAC address may be an upper-MAC layer address, a lower-MAC layer address, or the like of the non-AP MLD. This is not limited. A MAC address of the target AP MLD includes a MAC layer address of the target AP MLD, and the MAC layer address may be an upper-MAC layer address, a lower-MAC layer address, or the like of the target AP MLD.

The frame body field carries a frame body corresponding to the FT action frame.

In an implementation, as shown in Table 2, a frame body of the FT reassociation request frame carries at least one piece of the following information.

**Table 2: Information carried in a frame body of an FT reassociation request frame**

| Sequence number | Information |
|---|---|
| 1 | Capability information (capability information) |
| 2 | Listen interval (listen Interval) |
| 3 | Current AP address (current AP address) |
| 4 | Service set identifier (service set identifier, SSID) |
| 5 | Supported rates and basic service set (basic service set, BSS) membership selectors (supported rates and BSS membership selectors) |
| 6 | Extended supported rates and BSS membership selectors (extended supported rates and BSS membership selectors) |
| 7 | Power capability (power capability) |
| 8 | Supported channels (supported channels) |
| ... | ... |
| X | Mobility domain element (mobility domain element, MDE) |
| Y | Fast transition element (fast transition element, FTE) |
| Z | Basic multi-link element (basic multi-link element) |
| O | Operating channel information (operating channel information, OCI) element element |
| ... | ... |

In an implementation, as shown in Table 3, a frame body of the FT reassociation response carries at least one of the following information.

**Table 3: Information carried in a frame body of an FT reassociation response frame**

| Sequence number | Information |
|---|---|
| 1 | Capability information (capability information) |
| 2 | Status code (status code) |
| 3 | Association identifier (AID) |
| 4 | Supported rates and BSS membership selectors (supported rates and BSS membership selectors) |
| 5 | Extended supported rates and BSS membership selectors (extended supported rates and BSS membership selectors) |
| 6 | EDCA parameter set |
| ... | ... |
| x | Mobility domain element (mobility domain element, MDE) |
| y | Fast transition element (fast transition element, FTE) |
| z | Basic multi-link element (basic multi-link element) |
| o | Operating channel information (operating channel information, OCI) element element |
| ... | ... |

In this embodiment of this application, in a design, when the FT reassociation request and the FT reassociation response are transparently transmitted through the DS, an implementation is as follows:
1. The frame body of the FT reassociation request and/or the frame body of the FT reassociation response do/does not need to carry OCI, and the OCI is mainly used for channel information verification, thereby reducing signaling overheads of the FT reassociation request and/or the FT reassociation response.
2. After the current AP MLD and the target AP MLD make the tentative association based on the FT reassociation request and the FT reassociation response, an initial state of the second transmission link established between the non-AP MLD and the target AP MLD is an energy saving mode, and a state of the second transmission link is a doze (doze) state.
3. A mobility domain element (mobility domain element, MDE) in the frame body of the FT reassociation request and/or the frame body of the FT reassociation response carries 1-bit indication information. The indication information indicates whether the OS (over-the-DS) tentative association is supported.

Step 806: The non-AP MLD triggers path switching. The non-AP MLD sends a STA-to-AP mapping request frame to the target AP MLD. The STA-to-AP mapping request frame may be used to request the target AP MLD to perform path switching. For the STA-to-AP mapping request frame, refer to the foregoing third request.

Different from the procedure in FIG. 7a, in the procedure in FIG. 8, that the non-AP MLD sends the STA-to-AP mapping request frame to the target AP MLD in step 806 includes: The non-AP MLD sends the STA-to-AP mapping request frame to the current AP MLD. The current AP MLD sends the STA-to-AP mapping request frame to the target AP MLD through transparent transmission of the DS.

Step 807: The target AP MLD sends a context transfer request to the current AP MLD.

Step 808: The current AP MLD sends a context transfer response to the target AP MLD. For content carried in the context transfer response, refer to the foregoing descriptions.

Step 809: The target AP MLD sends a DS-STA-notify request to the DS.

When receiving the DS-STA-notify request (notify request), the DS may update a stored mapping relationship from the mapping relationship between the non-AP MLD and the current AP MLD to a mapping relationship between the non-AP MLD and the target AP MLD. The DS disconnects a data path with the current AP MLD, and establishes a data path with the target AP MLD. For the DS-STA-notify request (notify request), refer to the foregoing descriptions of the fourth request.

Step 8010: The current AP MLD deletes a context of the non-AP MLD.

In an implementation, when the non-AP MLD determines to trigger path switching in step 806, a disassociation frame may be further sent to the current AP MLD. For the disassociation frame, refer to the foregoing fifth request. The current AP MLD may send a DS-STA-notify request (notify request) for deletion to the DS. The DS deletes the mapping relationship that is between the non-AP MLD and the current AP MLD and that is stored in the DS.

It should be noted that, in the procedure in FIG. 8, before roaming or switching, the first transmission link exists between the non-AP MLD and the current AP MLD. In a roaming or switching process, the second transmission link may be established between the non-AP MLD and the target AP MLD through transparent transmission of the DS and/or the current AP MLD. The second transmission link includes: non-AP MLD -> target AP MLD. After roaming or switching ends, the uplink data and/or downlink data are/is transmitted between the non-AP MLD and the target AP MLD through the second transmission link. In a design, after step 8011, that is, after the target AP MLD sends a STA-to-AP mapping response frame to the non-AP MLD, the uplink data and/or downlink data are/is transmitted between the target AP MLD and the non-AP MLD through the second transmission link, the target AP MLD and the non-AP MLD encrypt/decrypt the uplink data and/or the downlink data by using the second key negotiated by the target AP MLD and the non-AP MLD, and the like, and corresponding data is transmitted on the second transmission link.

It should be noted that, in the foregoing descriptions of this application, the solution in Embodiment 2 is introduced for a single radio non-AP MLD and/or an EMLSR-type non-AP MLD. In a possible implementation, the solution in Embodiment 2 is not limited to being applied to only the foregoing two types of non-AP MLDs. For example, for a non-AP MLD that may simultaneously perform data receiving/sending with a plurality of AP MLDs, the solution provided in Embodiment 2 may also be used. This is not limited.

In the solution in Embodiment 2, the non-AP MLD is not limited to having a capability of simultaneously performing data receiving/sending with a plurality of AP MLDs, and the solution is also applicable to a non-AP MLD that can perform data transmission with only one AP MLD at a moment, thereby further improving roaming performance of the non-AP MLD, especially improving roaming performance of a non-AP MLD with a single-radio link and an EMLSR non-AP MLD.

### [Embodiment 3]

In Embodiment 1 or Embodiment 2, a beacon measurement request sent by a current AP MLD to a non-AP MLD may include indication information of a corresponding link of a serving AP. In an implementation, when receiving the beacon measurement request, the non-AP MLD may perform beacon measurement on each link of the non-AP. In a design, the non-AP MLD may report link quality of all measured links to the current AP MLD. Alternatively, when obtaining link quality of each link, the non-AP MLD compares link quality of a current link and link quality of the corresponding link that is of the serving AP and that is indicated in the beacon measurement request. The non-AP MLD reports the link quality of the link to the current AP MLD only when the link quality of the current link is higher than or equal to the link quality of the corresponding link of the serving AP; or the non-AP MLD does not report the link quality of the corresponding link when the link quality of the current link is not higher than or equal to the link quality of the corresponding link of the serving AP. This design mainly considers the following: The non-AP MLD reports the link quality of the measured link to the current AP MLD, and the current AP MLD selects, based on the link quality that is of the link and that is reported by the current AP MLD, a target AP MLD that meets a condition. If link quality of a link is lower than the link quality of the corresponding link of the serving AP, it is considered that the link has poor link quality and is not suitable to serve as a target AP MLD for switching. In this case, the non-AP MLD does not need to report a beacon measurement result of a link with poor quality, thereby reducing overheads of reporting the beacon measurement result.

In an implementation, the current AP MLD may send a radio measurement request frame (radio measurement request frame) to the non-AP MLD through a link. After receiving the radio measurement request frame, the non-AP MLD may perform corresponding measurement on a link of the non-AP MLD, and send a radio measurement report frame (radio measurement report frame) to the current AP MLD. The radio measurement report frame includes a measurement result of measurement by the non-AP MLD, and the like.

In a design, as shown in FIG. 10, the radio measurement request frame includes at least one of the following fields: a category (category), a radio measurement action (radio measurement action), a dialog token (dialog token), a quantity of repeated measurements (number of repetitions), or a measurement request element (measurement request elements).

The category field may indicate a category to which a corresponding radio measurement request frame belongs. For example, the radio measurement request frame may be a related frame used for radio measurement or a related frame used for roaming.

The radio measurement action may indicate a type of the radio measurement request. For example, the radio measurement action may indicate that a corresponding frame is a request frame or a measurement frame. Certainly, in this embodiment of this application, the radio measurement request frame shown in FIG. 10 is used to request the non-AP MLD to perform radio measurement. In this case, the type that is of the frame and that is indicated by the radio measurement action is a request frame.

A dialog token is used to identify a correspondence between a request frame and a response frame. In an implementation, the response frame may be in a format shown in FIG. 10. Dialog tokens carried in a pair of request frame and response frame have a same value.

A quantity of repetitions may indicate a quantity of repetitions of radio measurement. For example, if the quantity of repetitions is set to 0, it indicates that the non-AP MLD does not need to perform measurement repeatedly, and needs to perform only one measurement. Alternatively, if the quantity of repetitions is set to 65535, it indicates that the non-AP MLD needs to perform measurement repeatedly, until measurement is canceled. The quantity of repetitions field is an implementation. In other words, the frame format shown in FIG. 10 may not include the quantity of repetitions field.

A measurement request element is used to request beacon measurement, or indicate a received signal strength indication (received signal strength indication, RSSI) of a channel. In a design, when the measurement request element indicates the non-AP MLD to perform RSSI measurement, the non-AP MLD may report an RSSI of a measured link to the current AP MLD. That is, in Embodiment 1 and Embodiment 2, in addition to requesting the non-AP MLD to perform beacon measurement, the current AP MLD may further request the non-AP MLD to report the RSSI of the link measured by the non-AP MLD, and the like. Alternatively, when the measurement request element indicates the non-AP MLD to perform beacon measurement, the non-AP MLD may jump to a channel of a link that needs to be measured to send a probe request. The current AP MLD returns a probe response on a corresponding link. The non-AP MLD determines link quality of the corresponding link based on the received probe response. Alternatively, the non-AP MLD may directly listen to a beacon frame on a link that needs to be measured. The non-AP MLD determines link quality of the corresponding link based on the beacon frame that is listened to.

Further, in the frame format in FIG. 10, when the measurement request element indicates the non-AP MLD to perform beacon measurement, the frame format in FIG. 10 may further include a beacon report subfield (beacon report subelement). In an implementation, the beacon report subfield includes a reporting condition field, a threshold/offset reference field, and/or the like. In a design, when a value of the reporting condition field is set to a first value, the first value includes but is not limited to 7, and it indicates that the beacon measurement result is reported to the current AP MLD when a difference between a received signal-to-noise ratio of a corresponding link measured by the non-AP MLD and a received signal-to-noise ratio of a current serving AP is greater than or equal to the value in the threshold/offset reference field; or the beacon measurement result is not reported to the current AP when a difference between a received signal-to-noise ratio of a corresponding link measured by the non-AP MLD and a received signal-to-noise ratio of a current serving AP is not greater than or equal to the value in the threshold/offset reference field.

In a design, in a multi-link scenario, the current AP MLD may send the beacon measurement request to the non-AP MLD through any affiliated (affiliated) AP having a link with the non-AP MLD. In this case, the serving AP may be ambiguous to the non-AP MLD. In this case, the non-AP MLD cannot clearly determine a specific AP that serves as the serving AP for the received signal-to-noise ratio comparison. To resolve the problem, the following solutions are proposed.

Solution 1: In addition to the reporting condition field and/or the threshold/offset reference field, the frame format shown in FIG. 10 further includes a link identifier (link ID) field, as shown in FIG. 11. The link identifier field may indicate the corresponding link of the serving AP. Further, in addition to the link identifier field, a reserved (reserved) field is further included. This field may be referred to as a link identifier information field (link ID info field). The link identifier field may occupy 4 bits, and the reserved field may occupy 4 bits. Alternatively, the frame format shown in FIG. 10 carries a multi-link operation (multi-link operation, MLO) link information subfield (link information subelement). As shown in FIG. 11, the subfield includes: a field identifier (element ID), a length (length), an extended field identifier (element ID extension), and a link identifier (link ID bitmap) in a bitmap form.

Solution 2: A link through which the current AP MLD sends the beacon measurement request is limited, and it is specified that an AP corresponding to the link for sending the beacon measurement request is the serving AP. That is, on a non-AP MLD side, if the non-AP MLD side receives the beacon measurement request on a link, an AP corresponding to the link serves as the serving AP.

According to the foregoing method, the non-AP MLD may report a beacon measurement result that meets a condition. Compared with a manner of reporting beacon measurement results of all links, in this method, reporting overheads may be reduced.

It should be noted that, in this embodiment of this application:
1. A difference between different procedures is mainly described. For descriptions of different procedures, refer to each other.
2. In the procedures in FIG. 3, FIG. 5, FIG. 7a, and FIG. 8, an execution sequence of different steps is not limited.
3. The procedures in FIG. 3, FIG. 5, FIG. 7a, and FIG. 8 may include more or fewer steps than steps described in the flowcharts or text descriptions. This is not limited.

In the foregoing embodiments provided in this application, the methods provided in embodiments of this application are separately described from a perspective of interaction between devices. To implement the methods provided in embodiments of this application, the non-AP MLD, the current AP MLD, the target AP MLD, and the like may include a hardware structure and/or a software module, and the foregoing functions are implemented in a form of the hardware structure, the software module, or a combination of the hardware structure and the software module. Whether a function in the foregoing functions is performed by using the hardware structure, the software module, or the combination of the hardware structure and the software module depends on design constraints of particular applications of the technical solutions.

FIG. 12 and FIG. 13 each are a diagram of a structure of a possible apparatus according to an embodiment of this application. These communication apparatuses may implement one or more corresponding functions in the foregoing method embodiments. For example, a function implemented by a target AP MLD, a current AP MLD, or a non-AP MLD may implement beneficial effects of the foregoing method embodiments.

As shown in FIG. 12, a communication apparatus 1200 includes a processing unit 1210 and a transceiver unit 1220.

For example, the processing unit 1210 may also be referred to as a processor, a processing board, a processing module, or a processing apparatus. The transceiver unit 1220 may also be referred to as a transceiver, a transceiver machine, a transceiver module, a transceiver apparatus, a communication unit, or the like. Further, the transceiver unit 1220 may include at least one of a sending unit or a receiving unit. The sending unit and the receiving unit may be integrated together, or may be two independent units, or the like.

In a design, the communication apparatus 1200 is configured to implement the function of the target AP MLD in FIG. 3. Specifically, the transceiver unit 1220 is configured to receive first downlink data sent by a current AP MLD. The first downlink data is data encrypted by using a first key, the first key is a key negotiated by the current AP MLD and a non-access point non-AP MLD, and the target AP MLD is an AP MLD of the non-AP MLD after a basic service set BSS transition. The processing unit 1210 is configured to perform lower-medium access control LMAC layer processing and physical layer processing on the first downlink data, to obtain second downlink data. The transceiver unit 1220 is further configured to send the second downlink data to the non-AP MLD.

In a design, the communication apparatus 1200 is configured to implement the function of the current AP MLD in FIG. 3. Details are as follows:

The transceiver unit 1220 is configured to receive third downlink data sent by a distributed system DS. The processing unit 1210 is configured to encrypt the third downlink data by using a first key, to obtain first downlink data. The first key is a key negotiated by the current AP MLD and a non-access point non-AP MLD. The transceiver unit 1220 is further configured to send the first downlink data to a target AP MLD. The target AP MLD is an AP MLD of the non-AP MLD after a basic service set BSS transition.

In a design, the communication apparatus 1200 is configured to implement the function of the non-AP MLD in FIG. 3. Specifically, the transceiver unit 1220 is configured to receive, by using a target access point AP MLD, data sent by a current access point AP MLD. The target AP MLD is an AP MLD of the non-AP MLD after a basic service set BSS transition, the data is data encrypted by the current AP MLD by using a first key, and the first key is a key negotiated by the current AP MLD and the non-access point non-AP MLD. The processing unit 1210 is configured to decrypt the data by using the first key.

In a design, the communication apparatus 1200 is configured to implement the function of the target AP MLD in FIG. 5. Details are as follows:

The transceiver unit 1220 is configured to receive first uplink data sent by a non-access point non-AP MLD. The first uplink data is data encrypted by using a first key, the first key is a key negotiated by a current AP MLD and the non-AP MLD, and the target AP MLD is an AP MLD of the non-AP MLD after a basic service set BSS transition. The processing unit 1210 is configured to perform physical layer processing and lower-medium access control LMAC layer processing on the first uplink data, to determine second uplink data. The transceiver unit 1220 is configured to send the second uplink data to the current AP MLD.

In a design, the communication apparatus 1200 is configured to implement the function of the current AP MLD in FIG. 5. Details are as follows:

The transceiver unit 1220 is configured to receive second uplink data sent by a target AP MLD. The target AP MLD is an AP MLD of a non-access point non-AP MLD after a basic service set BSS transition. The processing unit 1210 is configured to: perform upper-medium access control UMAC layer processing on second uplink data, and decrypt the second uplink data by using a first key, to determine third uplink data. The first key is a key negotiated by the current AP MLD and the non-AP MLD. The transceiver unit 1220 is further configured to send the third uplink data to a distributed system DS.

In a design, the communication apparatus 1200 is configured to implement the function of the non-AP MLD in FIG. 5. Details are as follows:

The processing unit 1210 is configured to encrypt to-be-transmitted uplink data by using a first key, to determine first uplink data. The first key is a key negotiated by a current access point AP MLD and the non-AP MLD. The transceiver unit 1220 is configured to send the first uplink data to the current AP MLD by using a target AP MLD. The target AP MLD is an AP MLD of the non-AP MLD after a basic service set BSS transition.

For more detailed descriptions of the processing unit 1210 and the transceiver unit 1220, refer to the descriptions of FIG. 3 or FIG. 5 in the foregoing method embodiments. Details are not described herein again.

In this embodiment of this application, division into the units is an example, and is merely a logical function division. In actual implementation, another division manner may be used. In addition, functional units in embodiments of this application may be integrated into one physical device (for example, a processor), or each functional unit may be an independent physical device, or two or more units may be integrated into one unit for implementation. The integrated unit may be implemented in a form of hardware, or implemented in a form of a software functional module, or the like.

FIG. 13 is a diagram of another structure of a communication apparatus 1300 according to an embodiment of this application. For example, the communication apparatus 1300 shown in FIG. 13 may be an implementation of a hardware circuit of the communication apparatus 1200 shown in FIG. 12. For ease of description, FIG. 13 shows only a main part of the communication apparatus.

As shown in FIG. 13, a communication apparatus 1300 includes a processor 1310 and an interface circuit 1320. The processor 1310 and the interface circuit 1320 are coupled to each other.

For example, the processor 1310 may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor or the like. The interface circuit 1320 may be a transceiver, an input/output circuit, or the like.

Optionally, the communication apparatus 1300 may further include a memory 1330, configured to store instructions executed by the processor 1310, store input data required by the processor 1310 to run the instructions, or store data generated after the processor 1310 runs the instructions. For example, the instruction may also be referred to as a computer program, computer program code, or the like.

For example, the memory 1330 may be a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well known in the art.

When the communication apparatus 1300 is configured to implement the method of the target AP MLD, the current AP MLD, or the non-AP MLD in FIG. 3 or FIG. 5, the processor 1310 is configured to implement a function of the processing unit 1210, and the interface circuit 1320 is configured to implement a function of the transceiver unit 1220.

In a design, the interface circuit 1320 is configured to: receive a signal from a communication apparatus other than the communication apparatus 1300 and transmit the signal to the processor 1310, or send a signal from the processor 1310 to a communication apparatus other than the communication apparatus. The processor 1310 is configured to implement a function of the target AP MLD, the current AP MLD, or the non-AP MLD in FIG. 3 or FIG. 5 by using a logic circuit or by executing code instructions.

An embodiment of this application further provides a communication apparatus. The communication apparatus includes a processor and a memory. The processor is coupled to the memory, and the processor is configured to implement a function of the target AP MLD, the current AP MLD, or the non-AP MLD in FIG. 3 or FIG. 5. For example, the processor may execute the instructions in the memory, so that the communication apparatus implements one or more functions in the foregoing method embodiments, for example, a function implemented by the target AP MLD, the current AP MLD, or the non-AP MLD in FIG. 3 or FIG. 5. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in the target AP MLD, the current AP MLD, or the non-AP MLD in FIG. 3 or FIG. 5. The processor and the storage medium may alternatively exist in the target AP MLD, the current AP MLD, or the non-AP MLD in FIG. 3 or FIG. 5 and serve as discrete components.

An embodiment of this application further provides a computer-readable storage medium. The computer-readable storage medium stores instructions, and the instruction may also be referred to as a computer program, computer program code, or the like. The instruction runs on a computer, so that the computer performs a function of the target AP MLD, the current AP MLD, or the non-AP MLD in FIG. 3 or FIG. 5 in the foregoing method embodiments.

Optionally, the computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

An embodiment of this application further provides a computer program product, including a computer program or instructions. When the computer program or the instructions are run on a computer, the method of the target AP MLD, the current AP MLD, or the non-AP MLD in FIG. 3 or FIG. 5 is performed. For example, the computer program product includes one or more computer programs or instructions. When the computer program or the instructions are loaded and executed on the computer, all or a part of the procedure or function of the target AP MLD, the current AP MLD, or the non-AP MLD in FIG. 3 or FIG. 5 in embodiments of this application is performed.

All or a part of the methods in embodiments of this application may be implemented by software, hardware, firmware, or any combination thereof. When the software is used to implement the method, the method may be implemented completely or partially in a form of the computer program product.

An embodiment of this application further provides a chip. The chip includes a processor. The processor is coupled to a memory. The processor is configured to execute a computer program or instructions stored in the memory, so that the chip implements a function of the target AP MLD, the current AP MLD, or the non-AP MLD in FIG. 3 or FIG. 5.

An embodiment of this application further provides a communication system, including a first communication apparatus, a second communication apparatus, and a third communication apparatus.

The first communication apparatus may implement a function of the target AP MLD in FIG. 3 or FIG. 5. The second communication apparatus may implement a function of the current AP MLD in FIG. 3 or FIG. 5. The third communication apparatus may implement a function of the non-AP MLD in FIG. 3 or FIG. 5. For a specific structure of the first communication apparatus, the second communication apparatus, or the third communication apparatus, refer to the foregoing descriptions, for example, the structure description in FIG. 12 or FIG. 13.

In descriptions of this application, "at least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. In the text description of this application, the character "/" generally represents an "or" relationship between associated objects. "Including at least one of A, B, or C" may represent: including A, including B, including C, including A and B, including A and C, including B and C, and including A, B, and C.

Numerals used in embodiments of this application are merely used for differentiation for ease of description, but do not limit the scope of embodiments of this application. Sequence numbers of the foregoing processes do not mean an execution sequence, and the execution sequence of the processes should be determined based on functions and internal logic of the processes.

## Claims

1. A communication method, comprising:
receiving, by a target access point AP multi-link device MLD, first downlink data from a current AP MLD, wherein the first downlink data is data encrypted by using a first key, the first key is a key negotiated by the current AP MLD and a non-access point non-AP MLD, and the target AP MLD is an AP MLD of the non-AP MLD after a basic service set BSS transition;
performing, by the target AP MLD, lower-medium access control LMAC layer processing and physical layer processing on the first downlink data, to obtain second downlink data; and
sending, by the target AP MLD, the second downlink data to the non-AP MLD.

2. A communication method, comprising:
receiving, by a target access point AP multi-link device MLD, first uplink data from a non-access point non-AP MLD, wherein the first uplink data is data encrypted by using a first key, the first key is a key negotiated by a current AP MLD and the non-AP MLD, and the target AP MLD is an AP MLD of the non-AP MLD after a basic service set BSS transition;
performing, by the target AP MLD, physical layer processing and lower-medium access control LMAC layer processing on the first uplink data, to determine second uplink data; and
sending, by the target AP MLD, the second uplink data to the current AP MLD.

3. The method according to claim 1 or 2, wherein a first transmission link exists between the non-AP MLD and the current AP MLD, and the method further comprises:
receiving, by the target AP MLD, a first request, wherein the first request is used to request to establish a second transmission link between the non-AP MLD and the target AP MLD; and
establishing, by the target AP MLD, the second transmission link with the non-AP MLD.

4. The method according to claim 3, wherein the first request comprises indication information for enabling dual-link transmission of the non-AP MLD, and the dual links comprise the first transmission link and the second transmission link.

5. The method according to any one of claims 1 to 4, further comprising:
sending, by the target AP MLD, a second request to the current AP MLD, wherein the second request is used to request to enable the dual-link transmission of the non-AP MLD, and the second request comprises a maximum MAC layer protocol data unit MPDU length supported by the target AP MLD, and/or a maximum quantity of aggregated MAC layer service data units MSDUs allowed by the target AP MLD.

6. The method according to any one of claims 1 to 5, further comprising:
receiving, by the target AP MLD, a third request, wherein the third request is used to request to trigger path switching of the non-AP MLD; and
sending, by the target AP MLD, a fourth request to a distributed system DS, wherein the fourth request is used to request the DS to update a stored mapping relationship between the non-AP MLD and the current AP MLD to a mapping relationship between the non-AP MLD and the target AP MLD.

7. The method according to any one of claims 3 to 6, wherein one or both of the first request and the third request are from the non-AP MLD, and one or both of the first request and the third request are transmitted through an air interface between the non-AP MLD and the target AP MLD or are transmitted through the current AP MLD and the DS.

8. The method according to claim 7, wherein the first request does not comprise operating channel information OCI when the first request is transmitted through the current AP MLD and the DS.

9. The method according to any one of claims 6 to 8, wherein after receiving, by the target AP MLD, the third request, and before sending, by the target AP MLD, the fourth request to the DS, the method further comprises:
sending, by the target AP MLD, a context transfer request to the current AP MLD; and
receiving, by the target AP MLD, a context transfer response from the current AP MLD, wherein the context transfer response comprises context information of the non-AP MLD.

10. The method according to claim 9, wherein the context transfer response further comprises at least one of the following: a block acknowledgement protocol of a traffic identifier TID, a window start position of a transmit buffer of the TID, a window size of the transmit buffer of the TID, a window start position of an uplink receive end scoreboard, a window size of the uplink receive end scoreboard, a window start position of a receive reordering buffer, a window size of the receive reordering buffer, a currently received maximum packet number PN value, or an uplink replay counter.

11. The method according to any one of claims 1 to 10, wherein after a transmission path of the non-AP MLD is switched from the first transmission path to the second transmission path, the non-AP MLD and the target AP MLD encrypt/decrypt uplink data and/or downlink data by using a second key negotiated by the non-AP MLD and the target AP MLD.

12. A communication method, comprising:
receiving, by a current access point AP multi-link device MLD, third downlink data from a distributed system DS;
encrypting, by the current AP MLD, the third downlink data by using a first key, to obtain first downlink data, wherein the first key is a key negotiated by the current AP MLD and a non-access point non-AP MLD; and
sending, by the current AP MLD, the first downlink data to a target AP MLD, wherein the target AP MLD is an AP MLD of the non-AP MLD after a basic service set BSS transition.

13. A communication method, comprising:
receiving, by a current access point AP multi-link device MLD, second uplink data from a target AP MLD, wherein the target AP MLD is an AP MLD of a non-access point non-AP MLD after a basic service set BSS transition;
performing, by the current AP MLD, upper-medium access control UMAC layer processing on second uplink data, and decrypting the second uplink data by using a first key, to determine third uplink data, wherein the first key is a key negotiated by the current AP MLD and the non-AP MLD; and
sending, by the current AP MLD, the third uplink data to a distributed system DS.

14. The method according to claim 12 or 13, wherein a first transmission link exists between the current AP MLD and the non-AP MLD, and the method further comprises:
receiving, by the current AP MLD, a second request from the target AP MLD, wherein the second request is used to request to enable dual-link transmission of the non-AP MLD, the second request comprises a maximum medium access control MAC layer protocol data unit MPDU length supported by the target AP MLD, and/or a maximum quantity of aggregated MAC layer service data units MSDUs allowed by the target AP MLD, and the dual links comprise the first transmission link and a second transmission link between the non-AP MLD and the target AP MLD.

15. The method according to any one of claims 12 to 14, further comprising:
receiving, by the current AP MLD, a fifth request from the non-AP MLD, wherein the fifth request is used to request to disconnect the first transmission link between the non-AP MLD and the current AP MLD, the fifth request comprises first indication information, and the first indication information indicates the current AP MLD to reserve block acknowledgement BA information and/or context information of the non-AP MLD and buffer data that is not from the non-AP MLD; and
sending, by the current AP MLD, a sixth request to the DS, wherein the sixth request is used to request to delete a mapping relationship that is between the non-AP MLD and the current AP MLD and that is stored in the DS.

16. The method according to any one of claims 12 to 15, further comprising:
receiving, by the current AP MLD, a context transfer request from the target AP MLD; and
sending, by the current AP MLD, a context transfer response to the target AP MLD, wherein the context transfer response comprises context information of the non-AP MLD.

17. The method according to claim 16, wherein the context transfer response further comprises at least one of the following: a block acknowledgement protocol of a traffic identifier TID, a window start position of a transmit buffer of the TID, a window size of the transmit buffer of the TID, a window start position of an uplink receive end scoreboard, a window size of the uplink receive end scoreboard, a window start position of a receive reordering buffer, a window size of the receive reordering buffer, a currently received maximum packet number PN value, or an uplink replay counter.

18. The method according to any one of claims 12 to 17, further comprising:
sending, by the current AP MLD, a beacon measurement request to the non-AP MLD, wherein the beacon measurement request comprises indication information of a corresponding link of a serving AP.

19. The method according to any one of claims 12 to 18, further comprising:
sending, by the current AP MLD, a seventh request to the non-AP MLD, wherein the seventh request comprises second indication information, and the second indication information indicates the non-AP MLD to reserve the BA information and/or the context information of the non-AP MLD and buffer the data that is not from the non-AP MLD.

20. A communication method, comprising:
receiving, by a non-access point non-AP multi-link device MLD by using a target access point AP MLD, data from a current access point AP MLD, wherein the target AP MLD is an AP MLD of the non-AP MLD after a basic service set BSS transition, the data is data encrypted by the current AP MLD by using a first key, and the first key is a key negotiated by the current AP MLD and the non-access point non-AP MLD; and
decrypting, by the non-AP MLD, the data by using the first key.

21. A communication method, comprising:
encrypting, by a non-access point non-AP multi-link device MLD, to-be-transmitted uplink data by using a first key, to determine first uplink data, wherein the first key is a key negotiated by a current access point AP MLD and the non-AP MLD; and
sending, by the non-AP MLD, the first uplink data to the current AP MLD by using a target AP MLD, wherein the target AP MLD is an AP MLD of the non-AP MLD after a basic service set BSS transition.

22. The method according to claim 20 or 21, wherein a first transmission link exists between the non-AP MLD and the current AP MLD, and the method further comprises:
sending, by the non-AP MLD, a first request, wherein the first request is used to request to establish a second transmission link between the non-AP MLD and the target AP MLD.

23. The method according to claim 22, wherein the first request comprises indication information for enabling the dual-link transmission of the non-AP MLD, and the dual links comprise the first transmission link and the second transmission link.

24. The method according to any one of claims 20 to 23, further comprising:
sending, by the non-AP MLD, a third request, wherein the third request is used to request to trigger path switching of the non-AP MLD.

25. The method according to any one of claims 22 to 24, wherein one or both of the first request and the third request are sent to the target AP MLD, and one or both of the first request and the third request are transmitted through an air interface between the non-AP MLD and the target AP MLD or are transmitted through the current AP MLD and the DS.

26. The method according to claim 25, wherein the first request does not comprise operating channel information OCI when the first request is transmitted through the current AP MLD and the DS.

27. The method according to any one of claims 20 to 26, further comprising:
sending, by the non-AP MLD, a fifth request to the current AP MLD, wherein the fifth request comprises first indication information, and the first indication information indicates the current AP MLD to reserve block acknowledgement BA information and/or context information of the non-AP MLD and buffer data that is not from the non-AP MLD.

28. The method according to any one of claims 20 to 27, further comprising:
receiving, by the non-AP MLD, a beacon measurement request from the current AP MLD, wherein the beacon measurement request comprises indication information of a corresponding link of a serving AP.

29. The method according to any one of claims 20 to 28, further comprising:
receiving, by the non-AP MLD, a seventh request from the current AP MLD, wherein the seventh request comprises second indication information, and the second indication information indicates the non-AP MLD to reserve the BA information and/or the context information of the non-AP MLD and buffer data that is not from the non-AP MLD.

30. The method according to any one of claims 20 to 29, wherein after a transmission path of the non-AP MLD is switched from the first transmission path to the second transmission path, the non-AP MLD and the target AP MLD encrypt/decrypt uplink data and/or downlink data by using a second key negotiated by the non-AP MLD and the target AP MLD.

31. A communication apparatus, comprising a unit configured to implement the method according to any one of claims 1 to 11, or a unit configured to implement the method according to any one of claims 12 to 19, or a unit configured to implement the method according to any one of claims 20 to 30.

32. A communication apparatus, comprising:
a memory, configured to store program instructions; and
a processor, configured to execute the program instructions, so that the communication apparatus performs the method according to any one of claims 1 to 11, or the method according to any one of claims 12 to 19, or the method according to any one of claims 20 to 30.

33. An apparatus, comprising a processor and an interface circuit, wherein the interface circuit is configured to: receive a signal from an apparatus other than the apparatus and transmit the signal to the processor, or send a signal from the processor to an apparatus other than the apparatus, and the processor enables, by using a logic circuit or by executing code instructions, the apparatus to implement the method according to any one of claims 1 to 11, or the method according to any one of claims 12 to 19, or the method according to any one of claims 20 to 30.

34. A computer-readable storage medium, wherein the computer-readable storage medium stores instructions, and when the instructions are run on a computer, the computer is enabled to perform the method according to any one of claims 1 to 11, or the method according to any one of claims 12 to 19, or the method according to any one of claims 20 to 30.

35. A computer program product, comprising a computer program or instructions, wherein when the computer program or the instructions are run by an apparatus, the method according to any one of claims 1 to 11 is performed, or the method according to any one of claims 12 to 19 is performed, or the method according to any one of claims 20 to 30 is performed.

36. A chip, comprising a processor, wherein the processor is coupled to a memory and is configured to execute a computer program or instructions stored in the memory, so that a communication apparatus comprising the chip performs the method according to any one of claims 1 to 11, or performs the method according to any one of claims 12 to 19, or performs the method according to any one of claims 20 to 30.

37. A communication system, comprising:
a first communication apparatus, wherein the first communication apparatus is configured to perform the method according to any one of claims 1 to 11;
a second communication apparatus, wherein the second communication apparatus is configured to perform the method according to any one of claims 12 to 19; and
a third communication apparatus, wherein the second communication apparatus is configured to perform the method according to any one of claims 20 to 30.
